# EUROPÄISCHE PATENTSCHRIFT

(11) **EP 3 255 773 B1**
(45) Veröffentlichungstag und Bekanntmachung des Hinweises auf die Patenterteilung: **13.01.2021**
(21) Anmeldenummer: 16173814.1
(22) Anmeldetag: 09.06.2016
(51) Int. Cl.: H02M 5/32, H02M 7/483, H02M 1/32

(54) **VERLUSTARMES DOPPEL-SUBMODUL FÜR EINEN MODULAREN MEHRPUNKTSTROMRICHTER UND MODULARER MEHRPUNKTSTROMRICHTER MIT DIESEM**
LOW LOSS DOUBLE SUBMODULE FOR A MODULAR MULTI-LEVEL CONVERTER AND MODULAR MULTI-LEVEL CONVERTER HAVING SAME
SOUS-MODULE DOUBLE À FAIBLE PERTE POUR UN CONVERTISSEUR MULTIPOINTS MODULAIRE ET CONVERTISSEUR MULTIPOINTS MODULAIRE ÉQUIPÉ DE CELUI-CI

(43) Veröffentlichungstag der Anmeldung: 13.12.2017
(73) Patentinhaber: GE Energy Power Conversion Technology Ltd., Warwickshire CV21 1BU (GB)
(72) Erfinder: Janning, Joerg, 12277 Berlin (DE); Geske, Martin, 12277 Berlin (DE)
(74) Vertreter: Rüger Abel Patentanwälte PartGmbB

(56) Entgegenhaltungen:
- EP-A1- 2 852 019
- EP-A2- 2 368 749
- EP-A2- 2 432 109
- RUI LI ET AL: "A Hybrid Modular Multilevel Converter With Novel Three-Level Cells for DC Fault Blocking Capability", IEEE TRANSACTIONS ON POWER DELIVERY., Bd. 30, Nr. 4, August 2015 (2015-08), Seiten 2017-2026, XP055291822, US ISSN: 0885-8977, DOI: 10.1109/TPWRD.2015.2423258

## Beschreibung

Die vorliegende Erfindung betrifft ein Doppel-Submodul für einen modularen Mehrpunktstromrichter und einen modularen Mehrpunktstromrichter mit einer Reihenschaltung derartiger Doppel-Submodule.

Stromrichter zur Umwandlung von Gleichstrom in Wechselstrom und umgekehrt werden für viele Anwendungen, wie bspw. zur Kopplung elektrischer Netze mit drehzahlvariablen Antrieben, als Stromrichter für Photovoltaik- und Windkraftanlagen, als Frequenzumrichter für Pumpspeicherkraftwerke, zum Energieaustausch zwischen zwei elektrischen Netzen und dgl. verwendet. Hierzu sind Stromrichter in unterschiedlichen Schaltungstopologien und Konfigurationen bekannt. Für kleinere und mittlere Leistungen sind konventionelle Stromrichter in Zweipunkttechnik bekannt, die einfache und robuste Lösungen bieten und weit verbreitet sind.

Mit fortwährender Entwicklung von Leistungshalbleiterschaltern und Anwendungsmöglichkeiten von Leistungselektronik werden stets neuere Stromrichtertopologien für immer höhere Leistungs- und Spannungsbereiche gewünscht und entwickelt. Im Mittel- und Hochspannungsbereich werden häufig sog. Mehrpunktstromrichter eingesetzt, um mehrere Spannungsstufen zu erzeugen und die Spannungen auf höhere Niveaus bis in Bereiche der Hochspannungsgleichstromübertragung (HGÜ) zu erhöhen, wobei eine hinreichende Spannungsqualität bei hoher Stufenzahl zu erreichen ist.

Eine zunehmend verbreitete Stromrichtertopologie stellt der modulare Mehrpunktstromrichter (Modular Multilevel Converter, MMC bzw. M2C) dar. Dieser Stromrichter weist Phasenzweige bzw. -module auf, die aus zwei in Reihe miteinander verbundenen Stromrichterzweigen bestehen, wobei jeder Stromrichterzweig aus einer Anzahl gleichartiger Zellen (Submodulen) aufgebaut ist. Jedes Submodul ist durch eine Brückenschaltung mit ansteuerbaren Leistungshalbleiterschaltern und einem internen Kondensator zur Zwischenspeicherung elektrischer Energie gebildet. Die Brückenschaltung kann eine Halbbrücke mit zwei in Reihe verbundenen ansteuerbaren Leistungshalbleiterschaltern oder auch eine H- bzw. Vollbrücke sein, die zwei parallele Brückenzweige aufweist, in denen jeweils zwei Leistungshalbleiterschalter in Reihe zueinander angeordnet sind. Durch die modulare Bauweise ist der Stromrichter für unterschiedliche Leistungen und Anwendungen individuell skalierbar. Die Spannungen und Ströme auf der Wechselspannungs(AC)-Seite und der Gleichspannungs(DC)-Seite können hochdynamisch und weitgehend entkoppelt voneinander gesteuert und geregelt werden.

Ein derartiger modularer Mehrpunktstromrichter ist bspw. aus der DE 101 03 031 A1 bekannt, wobei die Submodule nach Art einer Halbbrücke ausgebildet sind. Jedes Submodul weist also lediglich zwei in Reihe zueinander geschaltete Leistungshalbleiterschalter auf, die so mit einem Kondensator als Energiespeicher des jeweiligen Submoduls verschaltet sind, dass eine unipolare Spannung, entweder die positive Kondensatorspannung oder eine Nullspannung, an den beiden Anschlussklemmen des Submoduls abfällt. Diese Schaltung ist relativ kostengünstig und zeichnet sich durch geringe Leitungsverluste aus.

Es sind auch modulare Mehrpunktstromrichter mit Submodulen in Form von Voll- oder H-Brücken bekannt. Die Verwendung von Voll- bzw. H-Brücken ermöglicht eine Invertierung der an dem Kondensator abfallenden Spannung an den Submodulklemmen. Erkauft wird dies aber mit einer höheren Anzahl von Leistungshalbleiterschaltern und dadurch einem erhöhten Schaltungsaufwand und erhöhten Kosten für den Stromrichter insgesamt. Außerdem sind bei solchen vollbrückenbasierten Submodulen im Betrieb stets zwei Schalter stromdurchflossen, wodurch die Leitungsverluste gegenüber halbbrückenbasierten Submodulen deutlich erhöht sind. Für Anwendungen im Mittel- und Hochspannungsbereich, wie bspw. bei Großantrieben oder zur Kupplung von elektrischen Netzen, können derartige Leitungsverluste inakzeptabel sein.

DE 10 2010 046 142 A1 und EP 2 432 109 A2 beschreiben ein Submodul für einen modularen Mehrpunktstromrichter mit einer asymmetrischen H-Brückenschaltung, die zwei parallele Reihenschaltungen aus einem Leistungshalbleiterschalter und einer Diode aufweist, und einem Kondensator, der parallel zu der asymmetrischen H-Brückenschaltung angeschlossen ist. Das Submodul ist zur Führung eines unidirektionalen Stromes und zur Erzeugung einer bidirektionalen Spannung konzipiert und zeichnet sich durch reduzierten Schaltungsaufwand und geringere Leitungsverluste aus. Z.B. ist die Anzahl der Leistungshalbleiterschalter im Vergleich zu Vollbrücken-Submodulen auf die Hälfte reduziert. In vielen Schaltzuständen ist nur ein oder sogar gar kein Leistungshalbleiterschalter leitend.

Ein wesentlicher Aspekt ist auch die Robustheit des Stromrichters im Falle eines Kurzschlusses im Gleichspannungszwischenkreis. Tritt in dem Gleichspannungszwischenkreis ein Kurzschluss auf, der durch ein Wechselspannungsnetz gespeist wird, können sehr hohe Kurzschlussströme durch die Stromrichterzweige fließen. Bei der Verwendung von Halbbrücken als Submodule fließen diese Kurzschlussströme durch die Freilaufdioden, die zu den jeweiligen Leistungshalbleiterschaltern antiparallel geschaltet sind und können zu einer Beschädigung oder sogar Zerstörung dieser und der Submodule führen.

US 2012/0243282 A1 beschreibt ein Submodul, das zwei Untereinheiten, die jeweils in Form einer Halbbrücke mit einer Reihenschaltung aus einem IGBT-Schalter und einer Diode ausgebildet sind, zu der ein Speicherkondensator parallel geschaltet ist, und Verbindungsmittel aufweist, die die beiden Untereinheiten miteinander verbinden. Die Verbindungsmittel weisen einen Emitterverbindungszweig, der zwei Emitter von IGBTs der beiden Untereinheiten miteinander verbindet und in dem eine Potenzialtrennungsdiode in Reihe mit einem Dämpfungswiderstand angeordnet ist, einen Kollektorverbindungszweig, der zwei Kollektoren von IGBTs der beiden Untereinheiten miteinander verbindet und in dem eine weitere Potenzialtrennungsdiode in Reihe mit einem weiteren Dämpfungswiderstand angeordnet ist, und einen Schaltzweig auf, der die Kathode der Potenzialtrennungsdiode des Emitterverbindungszweiges mit der Anode der Potenzialtrennungsdiode des Kollektorverbindungszweiges verbindet und in dem eine Schalteinheit angeordnet ist.

Das Submodul ermöglicht es, fünf unterschiedliche Spannungswerte zwischen seinen Anschlussklemmen einzustellen. Ferner weist es einen Schaltzustand auf, der im Fehlerfall zu einem Abbau eines Kurzschlussstroms führen kann. Wenn alle IGBTs ausgeschaltet werden, erfolgt ein Stromfluss zwischen den Anschlussklemmen über beide Speicherkondensatoren, die dann in Reihe oder parallel zueinander geschaltet sind. Dann baut sich über den Kondensatoren eine Gegenspannung auf, die dem Kurzschlussstrom entgegenwirkt. Das Submodul weist gegenüber einer reinen Parallelschaltung von Halbbrücken-Submodulen eine erweiterte Funktionalität auf. Hierzu sind aber insgesamt fünf IGBTs, von denen meist drei leitend geschaltet sind, und sieben Dioden erforderlich. Der Schaltungs- und Bauteileaufwand wie auch die Leitungsverluste im Betrieb fallen im Vergleich zur Halbbrücke um etwa 50% höher aus, da sich der Anteil an Halbleiterbauelementen im Strompfad bezogen auf ein Submodul erhöht.

Rui Li et al. "A Hybrid Modular Multilevel Converter With Novel Three-Level Cells for DC Fault Blocking Capability", IEEE Transactions on Power Delivery, Bd. 30, Nr. 4, August 2015, S. 2017-2016, beschreiben einen modularen Mehrpunktstromrichter und offenbaren ein sog. Klemm-Doppel-Submodul (Clamp-Double-Submodule, C-DSM), das dem Submodul der US 2012/0243282 A1 mit der Ausnahme entspricht, dass hier die Dämpfungswiderstande in dem Emitter- und dem Kollektorverbindungszweig weggelassen sind. Das Klemm-Doppel-Submodul weist also zwei parallel geschaltete Halbbrückensubmodule jeweils mit einem parallelen Speicherkondensator, eine erste Diode, die in dem Kollektorverbindungszweig zwischen den Halbbrückensubmodulen eingefügt ist, eine zweite Diode, die in dem Emitterverbindungszweig zwischen den Halbbrückensubmodulen eingefügt ist, und einen zusätzlichen Leistungshalbleiterschalter mit einer antiparallelen Freilaufdiode auf, der in einem mittleren Schaltzweig zwischen der Anode einer der Dioden und der Kathode der anderen Diode der Spannungsklemmschaltung eingefügt ist. Im normalen Betrieb ist der zusätzliche Schalter eingeschaltet, und die Leistungshalbleiterschalter der Halbbrückenmodule werden für die Stromrichtung geeignet angesteuert. Um DC-Fehlerströme zu unterbrechen, wird der zusätzliche Schalter in dem mittleren Schaltzweig ausgeschaltet, wodurch beide Kondensatoren in einer Stromrichtung parallel geschaltet werden und für die Begrenzung einer Überspannung durch Erzeugung eine Gegenspannung sorgen. In der entgegengesetzten Stromrichtung erfolgt das im Fehlerfall in analoger Weise durch eine Reihenschaltung, nach Abschaltung des mittleren Zweiges.

Angesichts der unterschiedlichen Einsatzmöglichkeiten und Anforderungen werden stets neuere Konfigurationen von Submodulen für modulare Mehrpunktstromrichter für jeweilige Anwendungen mit dem Ziel entwickelt, die Anzahl der Submodule, die Anzahl der Leistungshalbleiterschalter und die Leitungsverluste zu reduzieren und die Robustheit des Stromrichters im Kurzschlussfalle zu erhöhen.

Eine Übersicht von modularen Mehrpunktstromrichtern mit unterschiedlichen Submodulkonfigurationen, einschließlich Vollbrücken-, gekreuzten Konfigurationen, gemischten Zellen, asymmetrischen Zellen, etc., kann bspw. in Alireza Nami, et al.: "Modular Multilevel Converters for HVDC Applications: Review on Converter Cells and Functionalities", in IEEE Transactions on Power Electronics, Vol. 30, No. 1, Januar 2015, Seiten 18-36 gefunden werden.

WO2014/005634 A1, beschreibt ein Doppel-Submodul, das zwei parallel verbundene Vollbrücken-Submodule aufweist. Diese sind über ihre jeweiligen Wechselspannungsanschlüsse miteinander verbunden, während jeweils ein Gleichspannungsanschluss eines jeden Submoduls einen Modulanschluss des Doppel-Submoduls bildet. Das Doppel-Submodul kann vorteilhafterweise zur direkten AC-AC-Umwandlung verwendet werden. Es weist aber doppelt so viele Leistungshalbleiterschalter wie zwei in Reihe verbundene halbbrückenbasierte Submodule auf.

WO2014/146721 A1, beschreibt ein Doppel-Submodul, das durch zwei verschachtelte Vollbrücken-Submodule gebildet ist, wobei ein Leistungshalbleiterschalter mit einer antiparallelen Freilaufdiode zu beiden Submodulen gehört. Es wird also ein Paar aus Leistungshalbleiterschalter und Freilaufdiode bezogen auf zwei Submodule eingespart. Der Schaltungs- und Bauteileaufwand ist für die meisten Anwendungen mit DC-Verbindung zu hoch. Die Leitungsverluste im Betrieb für DC-Anwendungen fallen ebenfalls um etwa 50% höher aus, als die der Halbbrücke.

EP 2 852 019 A1 beschreibt ein Doppel-Submodul für einen modularen Mehrpunktstromrichter, das ein erstes und ein mit dem ersten gekoppeltes zweites Submodul aufweist. In einer Ausführungsform weist jedes Submodul eine asymmetrische H-Brückenschaltung mit zwei parallelen Brückenzweigen, die zwischen einem ersten und einem zweiten Gleichspannungsknoten des Submoduls angeschlossen sind, und einen Kondensator auf, der parallel zu der asymmetrischen H-Brückenschaltung zwischen dem ersten und dem zweiten Gleichspannungsknoten des Submoduls angeschlossen ist. Jedes Submodul weist zwei Brückenzweige mit jeweils einer Reihenschaltung aus einem ansteuerbaren Leistungshalbleiterschalter, zu dem eine Freilaufdiode antiparallel geschaltet ist, und einer Diode auf. Die Kathoden beider Dioden des ersten Submoduls sind direkt mit dem ersten Gleichspannungsknoten verbunden, während die Emitter der als IGBTs ausgebildeten Leistungshalbleiterschalter des ersten Submoduls direkt mit dem zweiten Gleichspannungsknoten verbunden sind. Die Anoden beider Dioden des zweiten Submoduls sind direkt mit dem zweiten Gleichspannungsknoten verbunden, während die Kollektoren der Leistungshalbleiterschalter des zweiten Submoduls direkt mit dem ersten Gleichspannungsknoten verbunden sind. Das erste und das zweite Submodul sind derart verschaltet, dass eine Diode sowohl Teil des zweiten Brückenzweigs des ersten Submoduls als auch Teil des ersten Brückenzweigs des zweiten Submoduls ist.

Es besteht weiterhin ein Bedarf nach neuen Submodulkonfigurationen für modulare Mehrpunktstromrichter für unterschiedliche Anwendungen, die die Vorteile der halbbrückenbasierten Submodule, einschließlich einer geringen Anzahl von Leistungshalbleiterschaltern und geringen Leitungsverlusten, bieten, während sie auch eine gewisse Kurzschlussfestigkeit ermöglichen. Tritt ein Fehler im Stromrichter auf, der zu einem starken Anstieg des Stromes auf der Netz-, Gleichspannungseite oder im Stromrichterzweig führt, wird dieser von der Regel- und Steuereinrichtung des Stromrichters detektiert, und die Pulse für die ansteuerbaren Halbleiterleistungsbauelemente werden gesperrt. Damit im Fehlerfall unabhängig von der Stromrichtung durch das Submodul im Falle einer Pulssperre des Stromrichters eine Gegenspannung aufgebaut werden kann, sind Submodul- oder Doppelsubmodulkonfigurationen mit dieser Eigenschaft von Vorteil. Die erzeugte Gegenspannung wirkt im Fehlerfall, nach erfolgter Pulssperre, dem Fehlerstrom entgegen, wodurch er verringert oder auch gewissermaßen abgeschaltet werden kann.

Es ist deshalb eine Aufgabe der Erfindung, ein Submodul zur Verwendung in einem modularen Mehrpunktstromrichter zu schaffen, das ähnliche Vorteile wie halbbrückenbasierte Submodule bietet und sich für viele Anwendungen, wie z.B. für Antriebe, für Photovoltaik-, Windkraftanlagen und Pumpspeicherkraftwerke oder zur Mittel- oder Hochspannungsgleichstromübertragung eignet. Insbesondere sollte das Submodul relativ kostengünstig aufgebaut sein, eine relativ geringe Anzahl von Leistungshalbleiterschaltern benötigen und geringe Leitungsverluste im Betrieb hervorrufen. Vorteilhafterweise sollte das Submodul in der Lage sein, im Fehlerfalle eine dem Fehlerstrom entgegenwirkende Gegenspannung aufzubauen. Diese Eigenschaft sollte vorteilhafteweise im Aufbau des Modules so erreicht werden, dass eine verhältnismäßig geringe Anzahl von Leistungshalbleiterbauelementen in den Strompfaden während des normalen Betriebes vorhanden sind, um die Leitungsverluste der Halbleiterbauelemente so gering wie möglich zu halten.

Eine weitere Aufgabe der Erfindung ist es, einen modularen Mehrpunktstromrichter mit einer Anzahl derartiger Submodule zu schaffen, der bei einfachem Aufbau mit relativ geringen Kosten implementiert und betrieben werden kann.

Diese Aufgabe wird durch ein Doppel-Submodul mit den Merkmalen des unabhängigen Anspruchs 1 und durch einen modularen Mehrpunktstromrichter mit den Merkmalen des unabhängigen Anspruchs 10 gelöst. Besonders vorteilhafte Ausführungsformen der Erfindung sind Gegenstand der Unteransprüche.

Gemäß einem Aspekt der Erfindung ist ein Doppel-Submodul für einen modularen Mehrpunktstromrichter geschaffen, das ein erstes und ein mit dem ersten gekoppeltes zweites Submodul aufweist. Jedes Submodul weist eine asymmetrische H-Brückenschaltung mit zwei parallelen Brückenzweigen, die zwischen einem ersten und einem zweiten Gleichspannungsknoten des Submoduls angeschlossen sind, wobei jeder Brückenzweig durch eine Reihenschaltung aus einem ansteuerbaren Leistungshalbleiterschalter und einer Diode gebildet ist, und einen Kondensator auf, der parallel zu der asymmetrischen H-Brückenschaltung zwischen dem ersten und dem zweiten Gleichspannungsknoten des Submoduls angeschlossen ist. Das erste Submodul des Doppel-Submoduls weist einen ersten Brückenzweig mit einer Reihenschaltung aus einem ersten ansteuerbaren Leistungshalbleiterschalter und einer ersten Diode, deren Kathode direkt mit dem ersten Gleichspannungsknoten des ersten Submoduls verbunden ist, und einen zweiten Brückenzweig mit einer Reihenschaltung aus einem zweiten ansteuerbaren Leistungshalbleiterschalter und einer zweiten Diode auf, deren Anode direkt mit dem zweiten Gleichspannungsknoten des ersten Submoduls verbunden ist. Das zweite Submodul weist einen ersten Brückenzweig mit einer Reihenschaltung aus einem ersten ansteuerbaren Leistungshalbleiterschalter und einer ersten Diode, deren Kathode mit dem ersten Gleichspannungsknoten des zweiten Submoduls direkt verbunden ist, und einen zweiten Brückenzweig mit einer Reihenschaltung aus einem zweiten ansteuerbaren Leistungshalbleiterschalter und einer zweiten Diode auf, deren Anode mit dem zweiten Gleichspannungsknoten des zweiten Submoduls direkt verbunden ist. Das erste und das zweite Submodul sind derart verschaltet, dass ein Leistungshalbleiterschalter oder eine Diode sowohl Teil des zweiten Brückenzweigs des ersten Submoduls als auch Teil des ersten Brückenzweigs des zweiten Submoduls ist.

Somit sind erfindungsgemäß zwei asymmetrische H-Brückenschaltungen derart miteinander verschaltet und aufgebaut, dass ein Halbleiterelement, ein Leistungshalbleiterschalter oder eine Diode, von beiden Submodulen gemeinsam verwendet werden kann. Das Doppel-Submodul kann gegenüber vielen bekannten Doppel-Submodulen wie auch gegenüber zwei in Reihe verbundenen Halbbrücken-Submodulen, die das Doppel-Submodul in vielen Anwendungen funktionsmäßig ersetzen kann, eine reduzierte Anzahl von Leistungshalbleiterschaltern und in vielen Schaltzuständen eine relativ geringere Anzahl von stromdurchflossenen Leistungshalbleiterschaltern auf. Es kann eine bipolare Ausgangsspannung mit insgesamt minimal vier Stufen erzeugen und prinzipiell einen bipolaren, bevorzugterweise jedoch einen unipolaren Strom führen. Im Betrieb kann in vielen Schaltzuständen sichergestellt werden, dass minimal nur drei Leistungshalbleiterbaulemente in dem Leitungspfad des Doppelsubmoduls enthalten sind, so dass die Leitungsverluste gering sind. Es sind auch Schaltzustände realisierbar, in denen die beiden Kondensatoren parallel zueinander geschaltet sind, was vorteilhafterweise zur Reduktion der Energieinhalte bzw. der Kapazität der Kondensatoren oder zum Aufbau einer Gegenspannung im Fehlerfalle genutzt werden kann. Das Doppel-Submodul weist einen einfachen und kostengünstigen Aufbau auf, der eine einfache Steuerung ermöglicht und auch eine Basis für geringe Betriebskosten schafft.

In Ausführungsformen kann der Verbindungspunkt zwischen dem ersten Leistungshalbleiterschalter und der ersten Diode des ersten Brückenzweiges des ersten Submoduls kann dann vorzugsweise einen ersten Modulanschluss bzw. eine erste Ein- /Ausgangsklemme des Doppel-Submoduls bilden, während der Verbindungspunkt zwischen dem zweiten Leistungshalbleiterschalter und der zweiten Diode des zweiten Brückenzweiges des zweiten Submoduls einen zweiten Modulanschluss bzw. eine zweite Ein- /Ausgangsklemme des Doppel-Submoduls bilden kann. Über diese Modulanschlüsse können mehrere Doppel-Submodule miteinander in Reihe verschaltet werden, um einen modularen Mehrpunktstromrichter zu bilden.

In einer ersten bevorzugten Ausführungsform des erfindungsgemäßen Doppel-Submoduls bildet der zweite Leistungshalbleiterschalter des zweiten Brückenzweiges des ersten Submoduls gleichzeitig den ersten Leistungshalbleiterschalter des ersten Brückenzweiges des zweiten Submoduls. Er wird also von beiden Submodulen gemeinsam benutzt. Über diesen Leistungshalbleiterschalter sind die beiden Submodule miteinander kombiniert bzw. verbunden.

In einer weiteren bevorzugten Ausführungsform bildet die zweite Diode des zweiten Brückenzweiges des ersten Submoduls gleichzeitig die erste Diode des ersten Brückenzweiges des zweiten Submoduls. Sie wird also von beiden Submodulen gemeinsam benutzt. Dann sind die beiden Submodule über diese Diode miteinander kombiniert bzw. verbunden.

Den Leistungshalbleiterschaltern kann jeweils eine antiparallel geschaltete Freilaufdiode zugeordnet sein. Die Freilaufdioden sind insbesondere dazu bestimmt, die Leistungshalbleiterschalter, die vorzugsweise durch IGBTs gebildet sind, aber auch IGCTs, MOSFETs, GTOs oder dgl. sein können, gegen ungewollte und unzulässig hohe Überspannungen und Sperrspannungen zu schützen. Die Freilaufdioden könnten bereits in der Halbleiterstruktur der steuerbaren Halbleiterschalter integriert sein. Für die Funktion des Doppel-Submoduls sind sie jedoch nicht zwingend erforderlich und könnten auch weggelassen werden.

Die Kondensatoren können bevorzugterweise durch einen unipolaren Speicherkondensator gebildet sein. Es könnten auch Kondensatorbatterien aus mehreren solchen Speicherkondensatoren verwendet werden, wenngleich dies für die meisten Anwendungsfälle nicht erforderlich ist.

Außer den genannten Leistungshalbleiterschaltern, der Dioden und Kondensatoren und, sofern vorhanden, den antiparallelen Freilaufdioden, sind vorzugsweise keine weiteren aktiven oder passiven elektrischen oder elektronischen Bauelemente in der Schaltungsanordnung des Doppel-Submoduls enthalten. Insbesondere ist das Doppel-Submodul vorzugsweise frei von Widerstandsbauelementen, insbesondere Dämpfungswiderständen in seinen Zweigen. Durch die Topologie des Doppel-Submoduls in Kombination mit einer geeigneten Ansteuerung der Submodule zur Einstellungen bestimmter Spannungen der Zwischenkreise und/oder einer geeigneten Wahl der Toleranz der Zwischenkreiskapazitäten und/oder einer zweckdienlichen Variation der Ansteuerspannung der Leistungshalbleiterschalter kommt das Submodul vorteilhafterweise ohne zusätzliche Dämpfungselemente aus, die normalerweise zur Dämpfung von Ausgleichsströmen eingesetzt werden.

Wie bereits erwähnt, ist das Doppel-Submodul dazu eingerichtet, bei Ansteuerung der Leistungshalbleiterschalter einen unipolaren Strom zwischen dem ersten und dem zweiten Modulanschluss zu führen und eine bipolare Anschlussspannung zwischen den Modulanschlüssen zu erzeugen. Prinzipiell könnte auch ein Strom in der umgekehrten Richtung von dem zweiten zu dem ersten Modulanschluss geführt werden, wobei dies jedoch für die angedachten Anwendungen für Stromrichter zur Versorgung drehzahlvariabler Antriebe, für Photovoltaik- und Windkraftanlagen, Pumpspeicherkraftwerke oder zur Gleichstromübertragung nicht vorgesehen ist. In diesen Anwendungen sind geringe Leitungsverluste von hoher Bedeutung, was zusammen mit dem weiteren Vorteil des Aufbaus einer möglichen Gegenspannung in Fehlerfällen das Doppel-Submodul hierfür besonders geeignet macht.

Das Doppel-Submodul kann vielfältige, zum Teil redundante Schaltzustände aufweisen, die durch Ansteuerung der Leistungshalbleiterschalter erzielt werden können. Jedenfalls ist das Doppel-Submodul dazu eingerichtet, bei Ansteuerung der Leistungshalbleiterschalter zwischen dem zweiten und dem ersten Modulanschluss eine Null-Anschlussspannung, eine Anschlussspannung, die der Spannung eines der Kondensatoren entspricht, eine Spannung, die der Summe der Spannungen der Kondensatoren entspricht, oder eine positive bzw. eine negative Anschlussspannung zu erzeugen, die sich bei einer Parallelschaltung der Kondensatoren einstellt. Die vielen unterschiedlichen Spannungsstufen ermöglichen auch ausgeklügelte Steuerungsstrategien für das Doppel-Submodul und insbesondere für den daraus gebildeten modularen Mehrpunktstromrichter.

Vorteilhafterweise ist das Doppel-Submodul in bestimmten Schaltzuständen dazu eingerichtet, einen Strom zwischen dem ersten und dem zweiten Modulanschluss des Doppel-Submoduls durch zwei parallele Strompfade innerhalb des Doppel-Submoduls zu führen, die jeweils einen der Kondensatoren der Submodule enthalten. Die Kondensatoren der Submodule können also parallel geschaltet werden. Dieser Schaltzustand kann es auch ermöglichen, im Fehlerfalle eine Gegenspannung aufzubauen, um einen Kurzschlussstrom abzubauen. Dadurch kann die Kurzschlussfestigkeit des Doppel-Submoduls und des daraus gebildeten modularen Mehrpunktstromrichters verbessert werden.

In bevorzugten Realisierungen werden für das erste und das zweite Submodul Kondensatoren ausgewählt, die mit einer sehr geringen Toleranz bezüglich ihrer Kapazität gefertigt sind. Die Toleranz sollte möglichst weniger als 3% betragen. Vorzugsweise ist sie kleiner als 1%. In besonders bevorzugten Ausführungsformen kann sie gegebenenfalls durch Sortierung und geeignete Paarung von Kondensatoren für ein Doppelsubmodul noch kleiner sein. Dann kann das Doppel-Submodul im Betrieb derart gesteuert bzw. geregelt werden, das die Spannungen an den Kondensatoren nur minimal, vorzugsweise ebenfalls um weniger als 1% oder weniger, voneinander abweichen, so dass im Wesentlichen keine oder nur unwesentliche Ausgleichsströme zwischen den Kondensatoren fließen, wenn diese parallel geschaltet werden. In diesem Fall werden zusätzliche Verluste als auch Ausgleichsströme über die Halbleiterleistungsbaulemente gering gehalten und etwaige Beschädigungen im Dauerbetrieb vermieden.

Gemäß einem weiteren Aspekt der Erfindung ist ein modularer Mehrpunktstromrichter zur Umwandlung einer Wechselspannung in eine Gleichspannung oder umgekehrt geschaffen. Der modulare Mehrpunktstromrichter weist wenigstens einen Phasenzweig auf, der einen Wechselspannungsanschluss und wenigstens einen mit einem Gleichspannungszwischenkreis verbundenen Gleichspannungsanschluss aufweist. Zwischen jedem Gleichspannungsanschluss und jedem Wechselspannungsanschluss ist ein Stromrichterzweig ausgebildet, wobei in jedem der Stromrichterzweige wenigstens ein erfindungsgemäßes Doppel-Submodul einer beliebigen der vorstehend beschriebenen Ausführungsformen angeordnet ist. Die Vorteile des Doppel-Submoduls, insbesondere der einfache und kostengünstige Aufbau, die geringe Anzahl von Leistungshalbleiterschaltern in der Schaltung, die geringe Anzahl von in Reihe geschalteten, stromdurchflossenen Leistungshalbleiterschaltern im Leitungspfad im Betrieb und die damit verbundenen vergleichsweise geringen Leitungsverluste, die Möglichkeit, einen Kurzschlussstrom durch eine Gegenspannung von zwei parallel geschalteten Kondensatoren abzubauen, kommen auch dem modularen Mehrpunktstromrichter zu Gute.

Der modulare Mehrpunktstromrichter kann eine beliebige Anzahl von Phasenzweigen aufweisen, die der gewünschten Anzahl von Phasen entspricht. Im Allgemeinen sind drei Phasenzweige vorgesehen. Je nach Anwendung kann auch ein einziger Phasenzweig ausreichen, oder es können zwei oder mehr als drei Phasen benötigt sein. Der modulare Mehrpunktstromrichter weist vorzugsweise einen ersten Gleichspannungsanschluss, der mit einem ersten, z.B. positiven Pol des Gleichspannungszwischenkreises verbunden sein kann, und einen zweiten Gleichspannungsanschluss auf, der mit einem zweiten, z.B. negativen oder negativeren Pol des Gleichspannungszwischenkreises verbunden sein kann. In jedem Stromrichterzweig des Stromrichters ist vorzugsweise die gleiche Anzahl von Doppel-Submodulen angeordnet. Vorzugsweise sind jeweils zwei oder mehrere in Reihe verbundene Doppel-Submodule vorgesehen. Prinzipiell können sich aber die Stromrichterzweige hinsichtlich der Anzahl der Doppel-Submodule voneinander unterscheiden.

Es kann eine Steuereinrichtung zur Steuerung des Betriebs des modularen Mehrpunktstromrichters vorgesehen sein, die dazu eingerichtet ist, die Leistungshalbleiterschalter nach einem vorgegebenen Muster derart anzusteuern, dass eine ein- oder mehrphasige Wechselspannung an einem Wechselspannungsanschluss des Stromrichters in eine Gleichspannung an dem Gleichspannungszwischenkreis oder umgekehrt umgewandelt wird. Insbesondere kann die Steuereinrichtung die Leistungshalbleiterschalter derart ansteuern, dass eine bipolare Anschlussspannung ausgegeben werden kann und stets ein unipolarer Strom zwischen den Modulanschlüssen des Doppel-Submoduls übertragen wird. Der modulare Mehrpunktstromrichter ist so, wie das Doppel-Submodul an sich, für viele unterschiedliche Anwendungen, z.B. zur Hoch-spannungsgleichstrom(HGÜ)-Leistungsübertragung, für große Leistungsantriebe, wie bspw. für Pumpspeicherkraftwerke, für Mittelspannungsantriebe, für Umrichteranlagen zur Bahnstromversorgung, zur Mittelspannungsgleichstromübertragung (MGÜ), bspw. für Photovoltaik- und Windkraftanlagen, und dgl. geeignet. Die vorliegenden Doppel-Submodule können die üblicherweise in modularen Mehrpunktstromrichtern verwendeten halbbrückenbasierten Submodule bei ähnlich geringen bzw. nur leicht erhöhten Leitungsverlusten, aber einer verbesserten Kurzschlussfestigkeit und vergrößerten Flexibilität, die bspw. durch die Möglichkeit der Parallelschaltung der Kondensatoren gegeben ist, ersetzen. Gegenüber der asymmetrischen H-Brücke, wie in DE 10 2010 046 142 A2 beschrieben, bleiben alle Vorteile gegenüber halbbrückenbasierten Submodulen bestehen, wohingegen die Halbleiterverluste zusätzliche durch das vorliegende Doppelsubmodul um etwa 25% verringert werden können.

In einer bevorzugten Ausführungsform kann die Steuereinrichtung dazu eingerichtet sein, einen Kurzschluss in dem Gleichspannungszwischenkreis zu erkennen und daraufhin alle Leistungshalbleiterschalter aller Doppel-Submodule in dem Kurzschlusspfad aus- oder einzuschalten, um einen Kurzschlussstrom über parallele Strompfade in jedem Doppel-Submodul zu führen, wobei jeder Strompfad einen der Kondensatoren der Submodule aufweist. Dadurch kann an den Kondensatoren eine dem Kurzschlussstrom entgegenwirkende Gegenspannung aufgebaut werden, die dann zu einem schnellen Abbau des Kurzschlussstroms führen kann. Der Stromrichter kann gegen Beschädigung und Zerstörung geschützt werden.

Die Steuereinrichtung kann, insbesondere in Verbindung mit einer toleranzarmen Auslegung der Kondensatoren des Doppel-Submoduls, dazu eingerichtet sein, die Spannung über den Kondensatoren der Submodule derart zu steuern bzw. zu regeln, dass beim Umschalten in einen Schaltzustand mit parallel verbundenen Kondensatoren eine Differenz der Spannungen der Kondensatoren einen vorgegebenen ersten Schwellenwert nicht überschreitet. Der erste Schwellenwert sollte derart festgelegt sein, dass hohe Ausgleichsströme und damit verbundene Probleme sicher vermieden werden können. Im Allgemeinen kann der erste Schwellenwert für die Differenz der Kondensatorspannungen mit der maximalen Toleranz für die Kapazität der Kondensatoren in Beziehung stehen. Er kann zu der maximalen Toleranz für die Kapazität der Kondensatoren proportional sein oder dieser im Wesentlichen entsprechen.

Zusätzlich oder alternativ kann die Steuereinrichtung dazu eingerichtet sein, die Spannung über den Kondensatoren der Submodule derart zu steuern bzw. zu regeln, dass vor dem Umschalten in einen Schaltzustand mit parallelen Kondensatoren eine Differenz der Kondensatorspannungen einen vorgegebenen zweiten Schwellenwert nicht unterschreitet. Der zweite Schwellenwert kann wiederum mit der maximalen Toleranz für die Kapazität der Kondensatoren in Beziehung stehen. Dadurch können bei gegebenen Asymmetrien der Kapazitäten der Kondensatoren Ausgleichsströme auch vor der Parallelschaltung der Kondensatoren vermieden bzw. reduziert werden. Die Steuereinrichtung kann unterschiedliche Schaltzwischenzustände nutzen, um wenigstens einen der Kondensatoren geringfügig aufzuladen oder zu entladen, um die Differenz der Kondensatorspannungen in den geeigneten Schwellenbereich von z.B. 5-20 Volt, bevorzugterweise 5-10 Volt, zu führen.

Die Steuereinrichtung kann weiter alternativ oder zusätzlich dazu eingerichtet sein, die Spannung über den Kondensatoren der Submodule derart zu steuern bzw. zu regeln, dass beim Umschalten in einen Schaltzustand mit einer Parallelschaltung der Kondensatoren die Spannung über dem Kondensator, dessen positiver und negativer Gleichspannungsknoten je über eine Diode in Durchlassrichtung mit dem anderen Kondensator verbunden ist, annähernd gleich oder in bestimmten Grenzen kleiner ist als die Spannung über dem Kondensator, dessen positiver und negativer Gelichspannungsknoten je über eine Diode in Sperrrichtung mit dem Kondensator verbunden ist. Damit kann ein sanfter Übergang in die Parallelschaltung der Kondensatoren erzielt werden, ohne dass hohe Ausgleichsströme fließen können. Die Vielzahl an möglichen Schaltzuständen erlaubt eine gezielte Einstellung der jeweiligen Kondensatorspannungen, um diese Bedingung erfüllen zu können.

Darüber hinaus kann eine Auslegung der Kondensatoren mit geringfügig unterschiedlichen Kapazitätswerten für das Erreichen unterschiedlicher Spannungen in bestimmten Schaltzuständen, die zeitlich vor einem Schaltzustand der Parallelschaltung beider Kondensatoren liegen, vorteilhaft sein, um die vorstehend genannte Bedingung der Spannungsdifferenz zu erfüllen. Demnach kann der in Stromflussrichtung erste Kondensator eine geringfügig kleinere, verzugsweise um 1% bis 2% kleinere Kapazität als die des zweiten Kondensators aufweisen. Damit kann sichergestellt werden, dass in Schaltzuständen mit einer Reihenschaltung beider Kondensatorspannungen am Ausgang die Spannungsverhältnisse durch die vorgegebene Stromflussrichtung zu einer geringen Spannungsdifferenz führen, die die zuvor genannte Bedingung erfüllt.

In manchen Ausführungsformen kann die Steuereinrichtung auch dazu eingerichtet sein, beim Umschalten in den Schaltzustand mit Parallelschaltung der Kondensatoren einen oder mehrere der Leistungshalbleiterschalter, insbesondere diejenigen, die bei der Parallelschaltung der Kondensatoren beteiligt sind, gestuft, mit stufenweise erhöhter Ansteuerspannung einzuschalten und zu betreiben. Insbesondere können diese Leistungshalbleiterschalter zunächst mit einer ersten Ansteuerspannung angesteuert werden, die kleiner ist die übliche Ansteuerspannung, z.B. kleiner als die übliche 15 Volt Gatespannung bei IGBTs, um sie derart einzuschalten, dass die Leistungshalbleiterschalter in dem Einschaltvorgang in ihrem aktiven Bereich, mit entsättigendem Verhalten und mit vergleichsweise hohem Durchlasswiderstand arbeiten, um etwaige auftretende Ausgleichströme effektiv zu dämpfen und zu verringern. Anschließend, z.B. nach einer festgelegten Zeitspanne, können die Leistungshalbleiterschalter mit einer höheren zweiten Ansteuerspannung angesteuert werden, um sie in dem Schaltzustand mit der Parallelschaltung der Kondensatoren verlustarm zu betreiben.

Weitere vorteilhafte Einzelheiten von Ausführungsformen der Erfindung ergeben sich aus den Unteransprüchen, der Zeichnung sowie der zugehörigen Beschreibung. Die Erfindung ist nachstehend anhand einer Zeichnung näher beschrieben, die beispielhafte, keinesfalls beschränkende Ausführungsformen der Erfindung zeigt, wobei gleiche Bezugszeichen in allen Figuren verwendet werden, um gleiche Elemente zu bezeichnen. Es zeigen:
Fig. 1 ein beispielhaftes System mit einem modularen Mehrpunktstromrichter, der sich zur unidirektionalen Leistungsübertragung, zur Kopplung einer Antriebsmaschine oder einer anderen Last mit einem Netz oder dgl. eignet, zur Verdeutlichung einer beispielhaften Anwendung der Erfindung, in Form eines vereinfachten Blockdiagramms;
Fig. 2 einen Schaltplan eines auf reduzierten H-Brückenschaltungen basierenden verschalteten Doppel-Submoduls, das in dem modularen Mehrpunktstromrichter nach Fig. 1 gemäß der Erfindung verwendet werden kann;
Fig. 3 eine Tabelle, die Schaltzustände des Doppel-Submoduls nach Fig. 2 mit den resultierenden Ausgangsspannungen veranschaulicht;
Fig. 4 eine Darstellung der Ausgangsspannungscharakteristik Uₐ[pu], normiert, bezogen auf die maximal erreichbare Ausgangsspannung, für das Doppel-Submodul nach Fig. 2;
Fig. 5a und 5b einen Schaltplan des Doppel-Submoduls nach Fig. 2 unter Veranschaulichung von Stromflüssen bei verschiedenen Schaltzuständen;
Fig. 6 eine beispielhafte Schaltfolge für das Doppel-Submodul nach Fig. 2 unter Veranschaulichung beispielhafter Schaltzustände gemäß der Tabelle nach Fig. 3 und der resultierenden normierten Anschlussspannungen Ua[pu];
Fig. 7 einen Schaltplan eines aus reduzierten H-Brückenschaltungen verschalteten Doppel-Submoduls, das in dem modularen Mehrpunktstromrichter nach Fig. 1 verwendet werden kann, gemäß einer weiteren Ausführungsform der Erfindung;
Fig. 8 eine Tabelle, die Schaltzustände des Doppel-Submoduls der Ausführungsform nach Fig. 7 mit den resultierenden Ausgangsspannungen veranschaulicht, ähnlich der Fig. 3;
Fig. 9 eine Darstellung der Ausgangsspannungscharakteristik Uₐ[pU], normiert, bezogen auf die maximal erreichbare Ausgangsspannung, für das Doppel-Submodul der Ausführungsform nach Fig. 7, in einer Darstellung ähnlich der Fig. 4;
Figuren 10a und 10b einen Schaltplan des Doppel-Submoduls der Ausführungsform nach Fig. 7 unter Veranschaulichung von Stromflüssen bei unterschiedlichen Schaltzuständen des Doppel-Submoduls, ähnlich den Figuren 5a und 5b; und
Fig. 11 eine beispielhafte Schaltfolge für das Doppel-Submodul nach Fig. 7 unter Veranschaulichung beispielhafter Schaltzustände gemäß der Tabelle nach Fig. 8 und der resultierenden normierten Anschlussspannungen Ua[pu].

Es wird nun auf Ausführungsformen der Erfindung Bezug genommen, die in den Zeichnungen veranschaulicht sind. Es sollte verständlich sein, dass die in den Zeichnungen veranschaulichten Ausführungsformen lediglich beispielhaft sind und die Erfindung als solche nicht beschränken. Vielmehr sind die Ausführungsformen lediglich dazu gedacht, mögliche Ausführungsformen zu erläutern und den Fachmann zu befähigen, die Erfindung auszuführen. Es sollte ferner verständlich sein, dass in dem Bemühen, eine konzise Beschreibung möglicher Ausführungsformen zu liefern, gegebenenfalls nicht alle von dem Umfang der Erfindung umfassten Einzelheiten angegeben sein können.

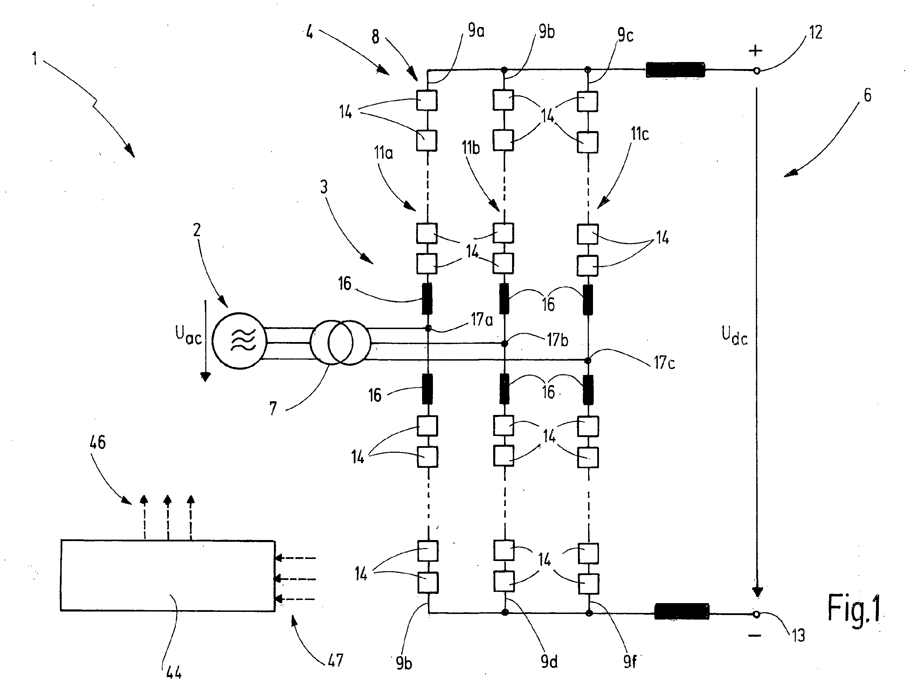

In Fig. 1 ist in einer stark vereinfachten Darstellung ein System 1 veranschaulicht, das bspw. ein Hoch- oder Mittelspannungsgleichstromverteilungssystem zur elektrischen Energieübertragung bei hoher bzw. mittlerer Gleichspannung darstellen kann. Das System 1 umfasst eine hier bspw. dreiphasige Wechselspannungsquelle 2, die z.B. ein elektrisches Energieversorgungsnetz, eine elektrische Wechselstrom(AC)-Maschine, ein AC-Generator, eine Windkraftanlage oder dgl. sein kann. An die Wechselspannungsquelle 2 ist mit seiner Wechselspannungsseite 3 ein elektrischer Umrichter 4 angeschlossen, der dazu dient, die an seiner Wechselspannungsseite 3 anliegende Wechselspannung in eine an seiner Gleichspannungsseite 6 anliegende Gleichspannung zu wandeln oder umgekehrt. Der Anschluss des Umrichters 4 an die Wechselspannungsquelle 2 kann optional über einen Transformator 7 erfolgen.

Ein solches System könnte bspw. zur Kopplung von Gleichspannungsanwendungen an Wechselstromnetze, wie Photovoltaik- oder Sammelschienensysteme mit Gleichspannung bzw. Gleichspannungsnetzen verwendet werden. Bevorzugterweise ist eine solche Anordnung für eine Kopplung von Anwendungen oder elektrischen Netzen mit Wechselspannung mit einem Wechselspannungsnetz, wie bspw. für Pumpspeicherkraftwerke unter Verwendung von Generatoren, Windkraftanlagen oder zum Antrieb elektrischer Maschinen, wie Pumpen und Kompressoren, als auch zur Kopplung elektrischer Wechselspannungsnetze einsetzbar. Die Gleichspannungsseite 6 kann bspw. über eine hier nicht näher dargestellte Gleichstromübertragungseinrichtung mit einem anderen elektrischen Energieversorgungsnetz verbunden sein. Ferner, kann ein solches System auch als sog. Back-to-Back System ausgeführt sein, bei dem die Gleichspannungsseite 6 mit einem elektrischen Stromrichter ähnlich dem Umrichter 4 direkt verbunden sein kann. Zur Übertragung von elektrischer Energie können die Stromrichter auf der Gleichspannungsseite 6 auch indirekt über eine Gleichspannungsübertragungseinrichtung miteinander verbunden sein.

Je nach Anwendung weist der Umrichter 4 wenigstens einen ersten Stromrichter 8 auf, der hier als Gleichrichter betrieben sein kann, um eine Wechselspannung U_{ac} der Wechselspannungsquelle 2 in eine ausgangsseitige Gleichspannung U_{dc} zu wandeln. Optional könnte der Umrichter 4 einen hier nicht dargestellten weiteren Stromrichter aufweisen, der die Spannung U_{dc} in eine passende Wechselspannung wandelt. Der Stromrichter 8 könnte umgekehrt als Wechselrichter eingesetzt werden, um die Gleichspannung U_{dc} in eine Wechselspannung zur Einspeisung in das Wechselspannungsnetz 2 umzuwandeln. Es versteht sich, dass sich die Funktion des bzw. der Stromrichter umkehrt, wenn der Energiefluss zu dem Energieversorgungsnetz oder der Spannungssenke 2 hin erfolgt.

Wie aus Fig. 1 ersichtlich, weist der Stromrichter hier sechs Stromrichterzweige 9a-9f auf, von denen jeweils zwei, ein oberer und ein unterer 9a, 9b bzw. 9c, 9d bzw. 9e, 9f, einen jeweiligen Phasenzweig 11a, 11b bzw. 11c bilden. Jeder Phasenzweig 11a, 11b, 11c erstreckt sich zwischen einer positiven Stromschiene bzw. einem positiven Gleichspannungsanschluss ("+") 12 des Stromrichters 8 und einer negativen Stromschiene bzw. einem negativen Gleichspannungsanschluss ("-") 13.

Wie ferner aus Fig. 1 ersichtlich, weist jeder Stromrichterzweig hier eine Reihenschaltung aus mehreren in Reihe geschalteten Stromrichter-Submodulen oder modularen Schaltern 14 auf. Die steuerbare Gleichspannung U_{dc} an den Gleichspannungsanschlüssen 12, 13 des Stromrichters 8 kann über die Schaltzustände der einzelnen Stromrichter-Submodule 14 dynamisch verändert werden. Die Anzahl der Stromrichter-Submodule 14 bestimmt dabei die verfügbare Anzahl von Stromrichter-Schaltzuständen, die eine feine Spannungsstufung und eine Spannungsform hoher Güte sowie hohe Spannungsniveaus bis in den Bereich der Hoch-spannungs-Gleichstrom-Übertragung(HGÜ) ermöglichen. Bei dem Stromrichter 8 handelt es sich somit um einen modularen MultiLevel- oder Mehrpunktstromrichter, der auch als MMC oder M2C bezeichnet wird.

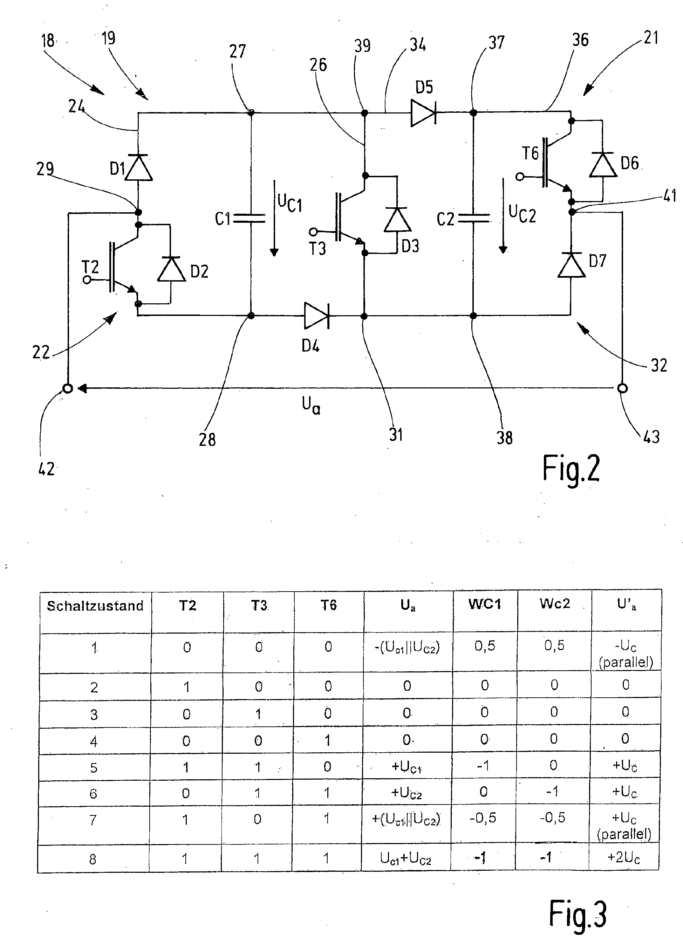

In der Technik sind unterschiedliche Konfigurationen für die Submodule 14 bekannt, die sich für unterschiedliche Anwendungen eignen. Bspw. werden vorwiegend sog. Halbbrücken verwendet, die im Wesentlichen eine Reihenschaltung zweier Leistungshalbleiterschalter mit jeweils antiparallel geschalteter Freilaufdiode darstellen, wobei zu der Reihenschaltung ein Kondensator als Energiespeicher parallelgeschaltet ist. Es sind auch Submodulkonfigurationen in Form von Voll- oder H-Brückenschaltungen, asymmetrischen H-Brückenschaltungen oder gemischte Konfigurationen bekannt. Eine erfindungsgemäße Konfiguration eines Submoduls 14 zur Verwendung in dem Stromrichter 8 ist nachstehend im Zusammenhang mit Fig. 2 näher erläutert.

In den Stromrichterzweigen 9a-9f können jeweils kreisstrombegrenzende Induktivitäten 16 vorgesehen sein, die eine Entkopplung der Stromrichterzweige voneinander unterstützen. An dem Verbindungspunkt zwischen den zugehörigen Stromrichterzweiten 9a, 9b bzw. 9c, 9d bzw. 9e, 9f sind die jeweiligen Wechselspannungsanschlüsse 17a, 17b, 17c des Stromrichters 8 herausgeführt, die mit der Wechselspannungsquelle 2 verbunden sind. Die gleichspannungsseitigen Anschlüsse der ersten, obersten Submodule 14 des Stromrichters 8 sind miteinander und mit der positiven Stromschiene 12 verbunden. Ähnlich sind die gleichspannungsseitigen Anschlüsse der letzten, untersten Submodule 14 miteinander und mit dem negativen Gleichspannungsanschluss 13 verbunden. Zwischen den Stromschienen 12, 13 liegt die Gleichspannung U_{dc} des Gleichspannungszwischenkreises an, die eine Hochspannung von bspw. über 100 kV sein kann.

Fig. 2 zeigt in Form eines vereinfachten Schaltplans eine Topologie eines erfindungsgemäßen Doppel-Submoduls oder modularen Schalters 18, wie es bzw. er in dem modularen Mehrpunktstromrichter 8 nach Fig. 1 verwendet werden kann, gemäß einer bevorzugten Ausführungsform der Erfindung. Es sollte beachtet werden, dass das Doppel-Submodul 18 anstelle von zwei in Reihe oder parallel geschalteten Halb-, Voll- oder H-Brücken oder sonstigen Submodulen eingesetzt werden kann. Insofern kann gegebenenfalls für jeden Stromrichterzweig 9a-f nur die halbe Anzahl der Doppel-Submodule 18 gemäß der Erfindung im Vergleich zu der Anzahl herkömmlicher Submodule 14 erforderlich sein.

Das erfindungsgemäße Doppel-Submodul 18 basiert im Wesentlichen auf einem asymmetrischen H-Brücken-Modul, wie es in der DE 10 2010 046 142 A1 beschrieben ist und bei dem im Vergleich zu einem Vollbrückenmodul in jedem Brückenzweig jeweils ein Leistungshalbleiter durch eine Diode ersetzt ist. Bezugnehmend auf Fig. 2 weist das Doppel-Submodul 18 im Wesentlichen ein erstes Submodul 19 und ein zweites Submodul 21 auf, die jeweils dem einer asymmetrischen H-Brücke basieren, jedoch erfindungsgemäß in bestimmter Weise miteinander verbunden und verschaltet sind.

Insbesondere weist das erste Submodul 19 eine Brückenschaltung 22 und einen zu der Brückenschaltung 22 parallel geschalteten Kondensator C1 auf. Die Brückenschaltung 22 ist mit zwei parallelen Brückenzweigen 24, 26 ausgebildet, die zwischen einem ersten und einem zweiten Gleichspannungsknoten 27, 28 parallel zueinander angeschlossen sind. Der erste Brückenzweig 24 weist eine Reihenschaltung aus einer ersten Diode D1 und einem ersten Leistungshalbleiterschalter T2 auf, dem eine antiparallele bzw. gegensinnig parallel geschaltete Freilaufdiode D2 zugeordnet ist. Die Freilaufdiode D2 dient dazu, bei geöffnetem Leistungshalbleiterschalter T2 den zugehörigen Leistungshalbleiterschalter gegen unzulässige Über- bzw. Sperrspannungen zu schützen. Unter bestimmten Umständen kann es auch sinnvoll sein, dass diese Diode auch einen Betriebsstrom führt.

Die Freilaufdiode D2 und die zu dieser in Reihe geschaltete Diode D1 sind in Durchflussrichtung von dem zweiten, in Fig. 2 unteren Gleichspannungsknoten 28 zu dem ersten, oberen Gleichspannungsknoten 27 des ersten Submoduls 19 ausgerichtet. Ferner ist die Diode D1 mit ihrer Kathode mit dem ersten Gleichspannungsknoten 27 und mit ihrer Anode mit dem Kollektor des hier als IGBT (Bipolartransistor mit isolierter Gate-Elektrode) ausgebildeten Leistungshalbleiterschalters T2 und mit der Kathode der Freilaufdiode D2 verbunden. Der Verbindungspunkt zwischen der Einheit aus dem Leistungshalbleiterschalter T2 und der Freilaufdiode D2 und der Diode D1 ist hier mit 29 bezeichnet.

In ähnlicher Weise weist der zweite Brückenzweig 26 eine Reihenschaltung aus einem zweiten Leistungshalbleiterschalter T3, dem eine antiparallel geschaltete Freilaufdiode D3 zugeordnet ist, und einer zweiten Diode D4 auf. Wiederum sind die Diode D4 und die Freilaufdiode D3 in Durchflussrichtung von dem zweiten Gleichspannungsknoten 28 zu dem ersten Gleichspannungsknoten 27 des Moduls 19 ausgerichtet. Allerdings ist hier die Diode D4 mit ihrer Anode mit dem zweiten Gleichspannungsknoten 28 und mit Ihrer Kathode mit dem Emitter des hier ebenfalls als ein IGBT ausgebildeten Leistungshalbleiterschalters T3 und mit der Anode der Freilaufdiode D3 verbunden. Der Verbindungspunkt zwischen der Diode D4 und der Einheit aus dem Leistungshalbleiterschalter T3 und der Freilaufdiode D3 ist hier mit 31 bezeichnet. Die Dioden D1, D4 sind also in der Brückenschaltung 22 diagonal zueinander angeordnet, wie es auch die Leistungshalbleiterelementeinheiten T2/D2 und T3/D3 sind.

Der Kondensator C1 als Energiespeicher des ersten Submoduls 19 ist zwischen den Gleichspannungsknoten 27, 28 angeschlossen. Insbesondere ist der Kondensator C1 vorzugsweise ein unipolarer Kondensator, der als ein Gleichspannungszwischenkreiskondensator des Submoduls 19 dient.

Die Leistungshalbleiterschalter T2, T3 sind ansteuerbare Schalter, die, wie bereits erwähnt, hier vorzugsweise durch IGBTs gebildet sind. Prinzipiell könnten aber auch andere abschaltbare Transistoren, wie bspw. Feldeffekttransistoren, Gate-Turn-Off-Thyristoren (GTOs) oder andere vergleichbare elektronische Bauelemente eingesetzt werden.

Das zweite, in Fig. 2 rechte Submodul 21 weist in ähnlicher Weise eine Brückenschaltung 32 und einen zu der Brückenschaltung 32 parallel geschalteten Kondensator C2 auf. Die Brückenschaltung 32 ist hier ebenfalls als asymmetrische H-Brückenschaltung mit zwei parallelen Brückenzweigen 34, 36 ausgebildet, die zwischen einem ersten, in Fig. 2 oberen Gleichspannungsknoten 37 und einem zweiten, unteren Gleichspannungsknoten 38 des zweiten Submoduls 21 parallel zueinander angeschlossen sind. Der erste Brückenzweig 34 weist eine Reihenschaltung aus einem ersten Leistungshalbleiterschalter, der hier durch den Leistungshalbleiterschalter T3 gebildet ist und dem die antiparallele Freilaufdiode D3 zugeordnet ist, und einer ersten Diode D5 auf. Die Diode D5 und die Freilaufdiode D3 sind in Durchlassrichtung von dem zweiten Gleichspannungsknoten 38 zu dem ersten Gleichspannungsknoten 37 des Submoduls 21 ausgerichtet. Ferner ist die Kathode der Diode D5 mit dem ersten, oberen Gleichspannungsknoten 37 verbunden, während die Anode der Diode D5 mit der Kathode der Freilaufdiode D3 und mit dem Kollektor des Leistungshalbleiterschalters T3 verbunden ist. Der Verbindungspunkt zwischen der Diode D5 und der Einheit aus dem Leistungshalbleiterschalter T3 und der zugehörigen Freilaufdiode D3 ist in Fig. 2 mit 39 bezeichnet.

In ähnlicher Weise weist der zweite Brückenzweig 36 des zweiten Submoduls 21 eine Reihenschaltung aus einem vorzugsweise ebenfalls als IGBT-ausgebildeten zweiten Leistungshalbleiterschalter T6, zu dem eine Freilaufdiode D6 antiparallel geschaltet ist, und einer zweiten Diode D7 auf. Die Diode D7 und die Freilaufdiode D6 sind ebenfalls in Durchlassrichtung von dem zweiten Gleichspannungsknoten 38 zu dem ersten Gleichspannungsknoten 37 des Submoduls 21 ausgerichtet. Die Diode D7 ist mit ihrer Anode mit dem zweiten Gleichspannungsknoten 38 und mit ihrer Kathode mit dem Emitter des Leistungshalbleiterschalters T6 und der Anode der Freilaufdiode D6 verbunden. Der Verbindungspunkt zwischen der Diode D7 und der Einheit aus dem Leistungshalbleiterschalter T6 und der Freilaufdiode D6 ist hier mit 41 bezeichnet.

Der Kondensator C2 ist parallel zu den beiden Brückenzweigen 34, 36 zwischen den Gleichspannungsknoten 37, 38 angeschlossen. Er ist vorzugsweise ein unipolarer Kondensator und dient als Gleichspannungszwischenkreiskondensator des zweiten Submoduls 21.

Gemäß der Erfindung sind die beiden Submodule 19, 21 derart miteinander verbunden und verschaltet, dass der zweite Leistungshalbleiterschalter T3 mit der zugehörigen Freilaufdiode D3 sowohl Teil des zweiten Brückenzweigs 26 des ersten Submoduls 19 als auch Teil des ersten Brückenzweigs 34 des zweiten Submoduls 21 ist. Insbesondere ist hier der Verbindungspunkt 31 des zweiten Brückenzweigs 26 des ersten Submoduls 19 mit dem zweiten Gleichspannungsknoten 38 des zweiten Submoduls 21 direkt elektrisch verbunden. Ferner ist der Verbindungspunkt 39 des ersten Brückenzweigs 34 des zweiten Submoduls 21 mit dem ersten Gleichspannungsknoten 27 des ersten Submoduls 19 direkt elektrisch verbunden. Im Vergleich zu einer Reihen- zweier Submodule auf der Basis asymmetrischer H-Brücken kann hier ein Leistungshalbleiterschalter mit der optionalen zugehörigen Freilaufdiode D3 pro Doppel-Submodul 18 eingespart werden.

Der Verbindungspunkt 29 zwischen der ersten Diode D1 und dem ersten Leistungshalbleiterschalter T2 des ersten Submoduls 19 bildet einen ersten Modulanschluss 42 des Doppel-Submoduls 18, während der Verbindungspunkt 41 zwischen der zweiten Diode D7 und dem zweiten Leistungshalbleiterschalter T6 des zweiten Submoduls 21 einen zweiten Modulanschluss 43 des Doppel-Submoduls 18 bildet. Über die Modulanschlüsse 42, 43 können die Doppel-Submodule 18 der in Fig. 2 veranschaulichten Ausführungsform in Reihe miteinander verbunden werden, um einen modularen Mehrpunktstromrichter, bspw. den Stromrichter 8 nach Fig. 1 mit beliebiger Anzahl von Stufen zu bilden.

Wie bereits erwähnt, sind die beiden Kondensatoren C1, C2 der beiden Submodule 19, 21 als Gleichspannungszwischenkreiskondensatoren vorgesehen. Die Gleichspannung U_{C1} bzw. U_{C2} an dem Kondensator C1 bzw. C2 ist aufgrund der Schaltung der Dioden D1, D4, D5, D7 und der Freilaufdioden D2, D3, D6 stets positiv und kann je nach Bemessung und Anwendung bspw. zwischen einigen hundert Volt und einigen kV betragen. Die Anschlussspannung Uₐ zwischen dem zweiten 43 und dem ersten Modulanschluss 42 kann im Wesentlichen die Werte 0, U_{C1}, U_{C2}, U_{C1} + U_{C2} sowie einen Wert annehmen, dass sich einstellt, wenn die Kondensatoren C1 und C2 parallel zueinander geschaltet werden. Die Spannung U_{C1} bzw. U_{C2} an jedem Kondensator C1 bzw. C2 kann größer oder kleiner werden. Ein Strom Iₐ kann durch das Doppel-Submodul 18 je nach Ansteuerung prinzipiell in beide Richtungen fließen. Bevorzugt wird jedoch ein unidirektionaler Betrieb, bei dem der Strom Iₐ von dem ersten Modulanschluss 42 zu dem zweiten Modulanschluss 43 fließt. Per Konvention soll hier ein Strom Iₐ, der in der Richtung von dem ersten 42 zu dem zweiten Modulanschluss 43 fließt, als positiver Strom bezeichnet werden, während der umgekehrter Strom als negativer Strom bezeichnet werden soll.

Erneut bezugnehmend auf Fig. 1 ist ferner eine Steuereinrichtung 44 ersichtlich, die dazu vorgesehen ist, auf der Basis der momentanen Betriebsbedingungen den Betrieb des Stromrichters 8 geeignet zu steuern. Die Steuerungspfade sind in Figur 1 der Übersichtlichkeit wegen lediglich durch gestrichelte Pfeile 46 angedeutet, die aus der Steuereinrichtung 44 heraustreten. Insbesondere steuert die Steuereinrichtung 44 die Leistungshalbleiterschalter T2, T3, T6 der Doppel-Submodule 18 aller Stromrichterzweige 9a-f geeignet an, um aus der Netz- oder Wechselspannung U bzw. deren Transformierten an den Wechselspannungsanschlüssen 17a-c eine gewünschte Gleichspannung U_{dc} zwischen den Gleichspannungsanschlüssen 12, 13 des Stromrichters 8 zu erzeugen oder umgekehrt. Die hierzu geeigneten Schaltsignale werden von der Steuereinrichtung 44 in Abhängigkeit von den aktuellen Betriebsbedingungen bzw. Parametern bestimmt, die von einer hier nicht näher dargestellten Überwachungseinrichtung im Betrieb laufend gemessen bzw. ermittelt werden. In Figur 1 sind Messpfade durch gestrichelte Pfeile 47 angedeutet, die in die Steuereinrichtung 47 eintreten. Es können bspw. die Phasenspannungen und/oder die Phasenströme an den Wechselspannungsanschlüssen 17a-c, die Zweigströme in den Stromrichterzweigen 9a-f und/oder der Zwischenkreisstrom in dem Gleichspannungszwischenkreis an den Gleichspannungsanschlüssen 12, 13, die Potentiale an den Gleichspannungsanschlüssen 12, 13 zur Erfassung der Gleichspannungszwischenkreisspannung U_{dc} und/oder andere Größen direkt gemessen werden. Es können auch Spannungen und Ströme innerhalb der Doppel-Submodule 18 erfasst werden. Manche Größen können aus direkt gemessenen Größen mit allgemein bekannten Beziehungen für elektrische Ströme und Spannungen bestimmt werden.

Zur weiteren Erläuterung der Funktionsweise und vorteilhafter Effekte des modularen Mehrpunktstromrichters 8 und der Doppel-Submodule 18 gemäß der Erfindung wird nun auf die Figuren 3 bis 5 Bezug genommen. Figur 3 zeigt eine Tabelle, die die Schaltzustände des Doppel-Submoduls 18 je nach Ansteuerung der Leistungshalbleiterschalter T2, T3 und T6 für die positive Errichtung des Stroms Iₐ durch das Doppel-Submodul 18 veranschaulicht. Eine "0" bei einem jeweiligen Schalter T2, T3, T6 bedeutet, dass der Leistungshalbleiterschalter ausgeschaltet bzw. nicht leitend angesteuert ist, während eine "1" kennzeichnet, dass der Leistungshalbleiterschalter eingeschaltet bzw. leitend angesteuert ist.

Eingetragen ist ferner die Ausgangsspannung Uₐ, die sich zwischen dem zweiten und dem ersten Modulanschluss 43, 42 des Doppel-Submoduls 18 bei dem jeweiligen Schaltzustand ergibt. Wie vorstehend erwähnt, kann die Spannung Uₐ die Werte 0, U_{c1}, U_{c2}, U_{c1} + U_{c2} sowie einen Wert U_{c1} | | U_{c2} annehmen, der sich bei einer Parallelschaltung der Kondensatoren C1 und C2 einstellt. Dargestellt ist ferner eine Spannung U'ₐ, die sich einstellt, wenn angenommen wird, dass die Spannungen an den Kondensatoren C1, C2 im Wesentlichen den gleichen Wert U_{C1}=U_{C2}=U_{C} aufweisen.

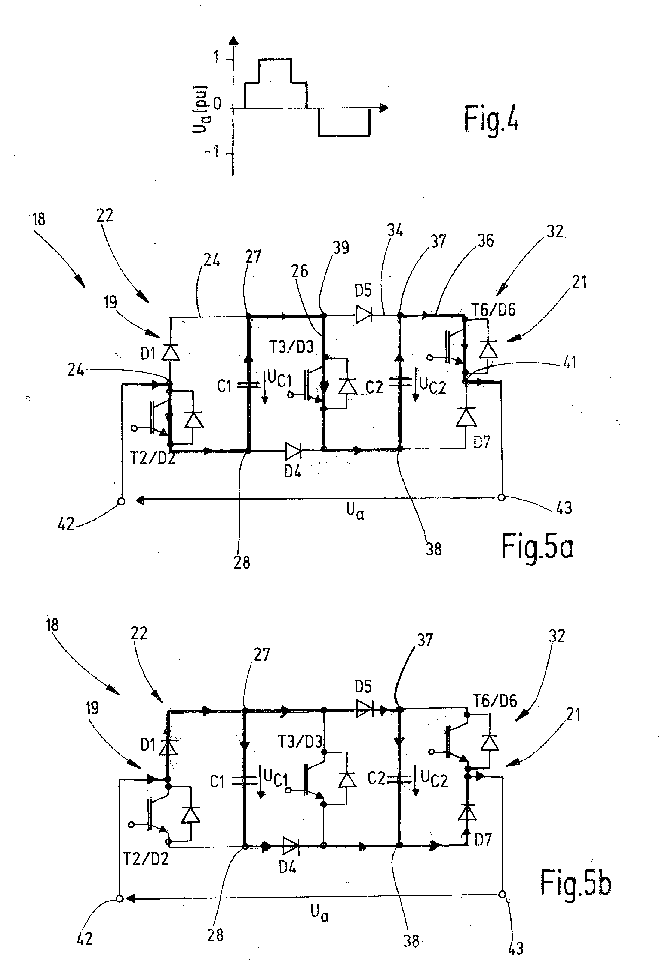

Die möglichen Ausgangsspannungen für das Doppel-Submodul 18 sind in Form einer vereinfachten Charakteristik Uₐ [pu], auf die maximal erreichbare Ausgangsspannung normiert (per Unit, pu), in Figur 4 dargestellt. Es ergibt sich eine bipolare Spannung, ähnlich wie bei vollbrückenbasierten Submodulen, aber mit insgesamt vier Spannungsstufen. Die maximale positive Spannung in Figur 4 stellt sich in dem Schaltzustand 7 der Tabelle nach Figur 3 ein, während die positive Zwischenstufe der Spannung in Figur 4 den Schaltzuständen 5, 6 und 7 entspricht. Die negative Spannungsstufe in Figur 4 entspricht dem Schaltzustand 7 mit parallel geschalteten Kondensatoren C1, C2.

Wie bereits erwähnt, wird im bevorzugten Betrieb ein Strom durch das Doppel-Submodul 18 nur in der positiven Richtung geführt. Eingetragen in der Tabelle nach Figur 3 sind ferner zwei Spalten mit der Überschrift WC1 bzw. WC2, die den Energiefluss in den bzw. aus dem jeweiligen Kondensator C1 bzw. C2 veranschaulichen. Ein positiver Wert kennzeichnet, dass der jeweilige Kondensator Energie aufnimmt, indem er aufgeladen wird. Ein negativer Wert kennzeichnet, dass der jeweilige Kondensator entladen wird bzw. Energie abgibt. Der positive oder negative Wert "1" kennzeichnet, dass der Kondensator die volle Energie aufnimmt bzw. abgibt, während der Wert 0,5 kennzeichnet, dass der Kondensator idealisiert die halbe Energie aufnimmt bzw. abgibt, wenn sich die Ströme in den parallelen Pfaden ideal symmetrisch aufteilen. Eine "0" kennzeichnet, dass der Kondensator seine Energie im Wesentlichen beibehält, wobei der Stromfluss an ihm vorbeigeführt wird.

Wie aus Figur 3 ersichtlich, können die Energieinhalte der Kondensatoren C1, C2 des Doppel-Submoduls 18 durch geeignete Schaltzustände beeinflusst werden. Dies kann bspw. genutzt werden, um ein sogenanntes "Balancieren" der Energieinhalte der Kondensatoren C1, C2 zu bewirken, um deren Spannungen an einen entsprechenden Referenz- oder Mittelwert anzupassen und anzugleichen.

Wie ferner aus Figur 3 ersichtlich, können in den Schaltzuständen 1 und 7 die Kondensatoren C1, C2 parallel zueinander geschaltet werden. Dies kann ebenfalls zum "Balancieren" der Kondensatorspannungen bzw. -energieinhalte genutzt werden.

Im Übrigen bietet das Doppel-Submodul 18 darüber hinaus redundante Schaltzustände, mit denen die jeweils gewünschte Anschlussspannung Uₐ erzielt werden kann. Bspw. kann eine Nullspannung in den Schaltzuständen 2, 3 oder 4 erzielt werden, wenn lediglich einer der Leistungshalbleiterschalter T2, T3, bzw. T6 eingeschaltet ist. Insofern können das Doppel-Submodul 18 als solches und der Stromrichter 8 insgesamt weiterbetrieben werden, selbst wenn einer dieser Schalter im Fehlerfalle einen Kurzschlusszustand einnimmt, wie dies typischerweise bei Halbleiterbauelementen in Press-Pack-Bauweise der Fall ist. Eine Redundanz ist auch in den Schaltzuständen 5 und 6 gegeben, in denen die ausgegebene Anschlussspannung Uₐ der einfachen Spannung U_{c} eines der Kondensatoren C1 bzw. C2 entspricht.

Figuren 5a und 5b zeigen die Schaltungsanordnung des Doppel-Submoduls 18 nach Figur 2 unter Veranschaulichung der Stromflüsse durch das Doppel-Submodul 18 in unterschiedlichen Schaltzuständen, die unterschiedliche Anschlussspannungen zwischen den Modulanschlüssen 43, 42 zur Folge haben. Figur 5a veranschaulicht einen Fall, wenn zwischen den Modulanschlüssen 43, 42 die maximale Anschlussspannung Uₐ=U_{C1}+U_{C2} anliegt. Dies kann z.B. in dem Schaltzustand 8 nach Figur 3 erreicht werden, wenn alle Leistungshalbleiterschalter T2, T3 und T6 eingeschaltet sind. Der Strom fließt dann von dem ersten Modulanschluss 42 über den Leistungshalbleiterschalter T2, durch den Kondensator C1, den Leistungshalbleiterschalter T3, den Kondensator C2 und den Leistungshalbleiterschalter T6 zu dem zweiten Modulanschluss 43 hin und über diesen hinaus. Obwohl in diesem Schaltzustand die maximale Anzahl an Leistungshalbleiterschaltern eingeschaltet ist, befinden sich nur drei Schalter T2, T3 und T6 in dem Strompfad, was im Vergleich zu entsprechenden Schaltzuständen von Doppel-Submodulen auf Basis von Vollbrücken oder asymmetrischen Vollbrücken eine Reduktion der Leistungshalbleiterschalter im Strompfad und folglich eine Reduktion der damit verbundenen Leitungsverluste bedeutet.

Figur 5b zeigt den Fall, bei dem der positive Strom Iₐ durch das Doppel-Submodul 18 hindurch unter Umgehung aller Leistungshalbleiterschalter T2, T3 und T6 zu dem zweiten Modulanschluss 43 fließt. Dieser Betriebsmodus ergibt sich in dem Schaltzustand 1 der Figur 3, bei dem alle Leistungshalbleiterschalter T2, T3 und T6 ausgeschaltet sind (und alternativ in dem Schaltzustand 7). Der Strom Iₐ fließt von dem ersten Modulanschluss 42 durch die erste Diode D1 und teilt sich anschließend auf zwei parallele Strompfade auf, von denen der eine von dem ersten Gleichspannungsknoten 27 des ersten Submoduls 19 über die erste Diode D5 des zweiten Submoduls 21, durch den Kondensator C2 zu dem zweiten Gleichspannungsknoten 27 des zweiten Submoduls 21 fließt. Ein zweiter Teilstrom fließt über den Kondensator C1 und durch die zweite Diode D4 des ersten Submoduls 19 zu dem Gleichspannungsknoten 38 hin, wo er sich mit dem ersten Teilstrom vereinigt. Der Gesamtstrom fließt dann durch die zweite Diode D7 des zweiten Submoduls 21 zu dem zweiten Modulanschluss 43 weiter.

Somit sind in diesem Betriebszustand die Kondensatoren C1, C2 vorteilhafterweise parallel zueinander geschaltet, was zum einen, wie bereits erwähnt, ein Balancieren deren Energieinhalte ermöglicht und zum anderen eine erhöhte resultierende Kapazität der parallel verbundenen Kondensatoren C1, C2 ergibt, was bspw. dazu verwendet werden könnte, die Menge der gespeicherten, elektrischen Energie durch Reduktion der Zwischenkreiskapazitäten von C1, C2 der Doppel-Submodule in dem modularen Mehrpunktstromrichter 8 zu verringern. Für eine bestimmte erforderliche Kapazität an dem Gleichspannungszwischenkreis des Stromrichters 8 könnten die Kondensatoren C1, C2 der Doppel-Submodule 18 kleiner ausgelegt werden. Dies trägt neben der Reduktion der Anzahl der Halbleiterbauelemente zu einer weiteren Einsparung der Kosten für die Fertigung der Submodule und der Stromrichter bei.

Der Schaltzustand 1 mit den parallel geschalteten Kondensatoren C1, C2 ist auch im Fehlerfalle von Vorteil, wenn ein durch die Wechselspannung getriebener Kurzschlussstrom in der positiven Flussrichtung durch das Doppel-Submodul fließt. Die Steuereinrichtung 44 kann einen derartigen Fehlerfall anhand der Messsignale 47 erkennen und über die Steuerpfade 46 die Doppel-Submodule 18 entsprechend ansteuern, um die Leistungshalbleiterschalter T2, T3 und T6 auszuschalten. Der Kurzschlussstrom wird dann über die beiden parallelen Strompfade mit den Kondensatoren C1 und C2 in jedem Doppel-Submodul 18 geführt, wobei die Kondensatoren C1, C2 aufgeladen werden. An den Kondensatoren baut sich dann eine dem Kurzschlussstrom entgegenwirkende Gegenspannung U_{C1} und U_{C2} auf, die den Kurzschlussstrom abbaut oder zumindest verhindert, dass dieser rasant weiter ansteigt. Die Steuereinrichtung 44 kann dann bedarfsweise entsprechende Schutz- bzw. Leistungsschalter auf der Wechsel- oder auch Gleichspannungsseite betätigen, um den Stromrichter 8 von dem Kurzschlussfehler zu isolieren oder von dem elektrischen Netz 2 zu trennen. Die Bauelemente der Doppel-Submodule 18 bzw. des Stromrichters 8 können jedenfalls weitgehend gegen Zerstörung geschützt werden.

Somit ist ein Doppel-Submodul 18 geschaffen, das einen einfachen und kostengünstigen Aufbau aufweist, der auch die Basis für geringe Herstellungs- und Betriebskosten schafft. Dabei kann eine für viele Anwendungen passende Strom- und Spannungscharakteristik erzielt werden, die denjenigen anderer bekannter Submodule entspricht, jedoch zusätzliche Funktionalitäten ermöglicht. Die Anzahl der Halbleiterbauelemente ist gegenüber vergleichbaren Submodulen auf Basis von Vollbrücken reduziert. Die Anzahl der Leistungshalbleiter im Strompfad ist in vielen Schaltzuständen gegenüber einer Reihenschaltung von Vollbrückenvarianten ebenfalls reduziert, was die Leitungsverluste und die Betriebskosten verringert. Im Vergleich zu anderen bekannten Doppelsubmodulen ist die Anzahl der Leistungshalbleiter deutlich reduziert, wobei der Betrieb des Doppelsubmoduls im Wesentlichen für unidirektionalen Stromfluss eingerichtet ist, wie er für die meisten, insbesondere die hier relevanten Stromrichteranwendungen geeignet ist. Entsprechend sind auch eine einfache und kostengünstige Realisierung und ein effizienter Betrieb eines modularen Mehrpunktstromrichters für unterschiedliche Anwendungen ermöglicht.

Im Betrieb muss verhindert werden, dass beträchtliche Ausgleichsströme zwischen den Kondensatoren fließen, die zusätzliche Verluste in den Kondensatoren oder Halbleiterleistungsbauelemente nach sich ziehen oder sogar zur Beschädigung der Bauelemente führen könnten. In bevorzugen Ausführungsformen sind deshalb die Kondensatoren C1 und C2 des Doppel-Submoduls 18 speziell ausgewählt, um eine äußerst geringe Toleranz k bezüglich ihrer Kapazität zu haben. Zu diesem Zweck sollte die Toleranz k möglichst kleiner als 3 % sein. Vorzugsweise ist sie kleiner als 1 %. In besonders bevorzugten Implementierungen kann durch Sortierung und geeignete Paarung von Kondensatoren C1, C2 für ein Doppelsubmodul eine Toleranz k von weniger als 1 % erreicht werden. Dann kann im Betrieb die Steuereinrichtung 44 durch Überwachung der Steuerflüsse und geeignete Steuerung der Leistungshalbleiterschalter T2, T3 und T6 der Doppel-Submodule 18 sicherstellen, dass die Spannungen an den Kondensatoren nur minimal, jedenfalls um maximal einen ersten Schwellenwert Th1 voneinander abweichen. Der erste Schwellenwert kann vorzugsweise ebenfalls 1 % oder weniger betragen, so dass dann keine oder nur sehr geringe Ausgleichsströme zwischen den Kondensatoren C1, C2 fließen und diese ohne Weiteres parallel geschaltet werden können.

Zusätzlich oder als eine Alternative hierzu kann die Steuereinrichtung dazu eingerichtet sein, die Spannungen U_{C1} bzw. U_{C2} über den Kondensatoren C1, C2 derart zu steuern bzw. zu regeln, dass beim Umschalten in einen Schaltzustand mit einer Parallelschaltung der Kondensatoren C1, C2, z.B. in den Schaltzustand 1 oder 7 in der Tabelle nach Fig. 3, die Spannung U_{C1} über den hier in Stromflussrichtung vorgeschalteten Kondensator C1 des Doppelsubmodules nach Fig.2 kleiner ist als die Spannung U_{C2} über dem in Stromflussrichtung nachgeschalteten Kondensator C2. Damit kann verhindert werden, dass beim Übergang in die Parallelschaltung hohe Ausgleichsströme fließen können.

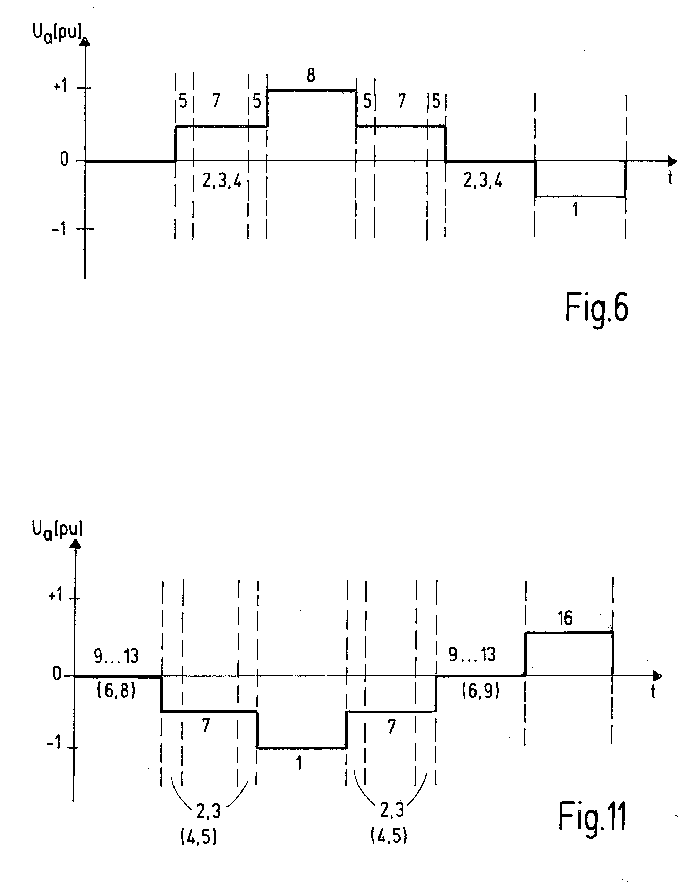

Bezug nehmend auf Fig. 6, die eine beispielhafte Schaltfolge mit den resultierenden normierten Anschlussspannungen Ua[pu] veranschaulicht, kann der stromaufwärtige Kondensator C1, der mit den Anoden der zwischen den Gleichspannungsknoten 27, 37 bzw. 28, 38 geschalteten Dioden D5 bzw. D4 verbunden ist, vor den Schaltzuständen 1 und 7 jeweils weniger aufgeladen werden als der stromabwärtige Kondensator C2, der mit den Kathoden der Dioden D5 bzw. D4 verbunden ist. Dies kann bspw. dadurch erzielt werden, dass beim Übergang von einem der Zustände 2, 3, 4 (mit der Anschlussspannung Uₐ = 0) in den Schaltzustand 7 (Uₐ = U_{c}) zuvor kurzzeitig in den Schaltzustand 5 geschaltet wird, um den Kondensator C1 geringfügig zu entladen. Die Differenz der Spannungen U_{C1} und U_{C2} der beiden Kondensatoren C1 und C2 wird so vorzugsweise auf einen Wert eingestellt, der kleiner als ein erster Schwellenwert Th1 von z.B. 20 Volt und größer als ein zweiter Schwellenwert Th2 von z.B. 5 Volt ist, wobei ein bevorzugter Schwellenbereich 5-10 Volt beträgt. Damit sperren beide Diode D4 und D5. Beim anschließenden Übergang in den Schaltzustand 7 wird der Kondensator C1 langsam geladen bis die Dioden D4 und D5 leitend werden, so dass dann die Parallelschaltung der Kondensatoren C1, C2 sanft, ohne unzulässige Ausgleichsströme erfolgt. Dämpfungswiderstände für verbleibende Ausgleichsströme sind nicht erforderlich.

Ebenso kann nach dem Schaltzustand 7 (Uₐ = U_{c}) und vor dem Übergang zu einem der Zustände 2, 3, 4 (Uₐ = 0) kurzzeitig in den Schaltzustand 5 geschaltet werden, um die gewünschte Bedingung U_{C1} < U_{C2} zu erzwingen, um einen sanften anschließenden Übergang in den Schaltzustand 1 zu erhalten.

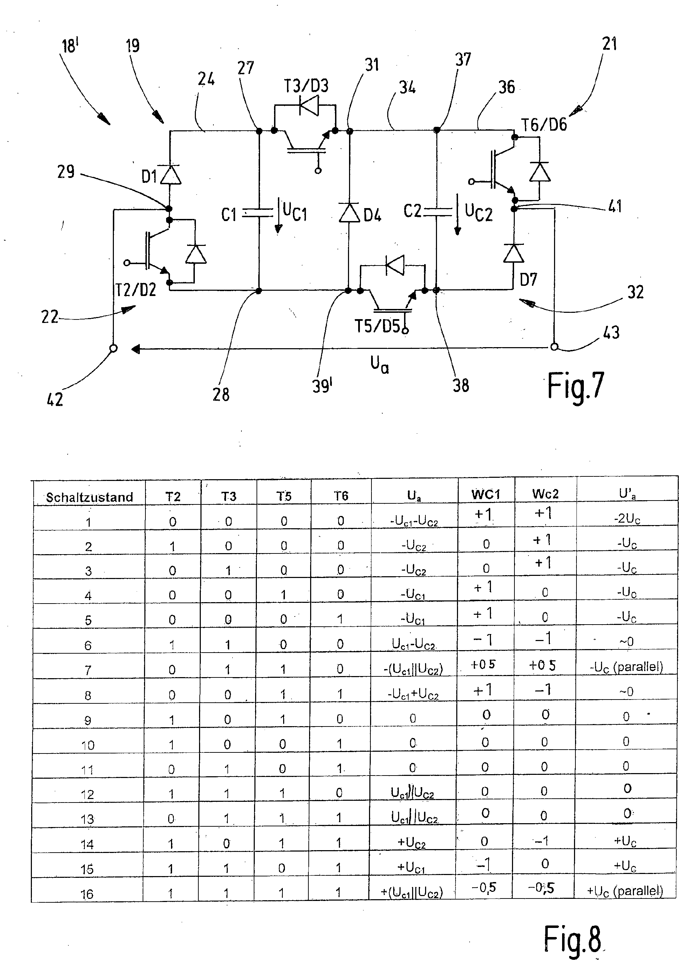

Figur 7 zeigt eine weitere Ausführungsform eines erfindungsgemäßen Doppel-Submoduls 18'. Soweit Übereinstimmung im Aufbau und/oder in der Funktion mit der vorstehend erläuterten ersten Ausführungsform des Doppel-Submoduls 18 gemäß den Figuren 2-5 besteht, wird unter Zugrundelegung gleicher Bezugszeichen auf die vorstehende Beschreibung verwiesen.

Die Ausführungsform des Doppel-Submoduls 18' nach Figur 7 unterscheidet sich von derjenigen gemäß den Figuren 2-5 insbesondere dadurch, dass hier anstelle der Einheit aus dem Leistungshalbleiterschalter T3 und der Freilaufdiode D3 nun die Diode D4 sowohl von dem ersten Submodul 19 als auch von dem zweiten Submodul 21 gemeinsam benutzt wird. Die Diode D4 ist somit als die zweite Diode sowohl Teil des zweiten Brückenzweigs 26 des ersten Submoduls 19 als auch als die erste Diode Teil des ersten Brückenzweigs 34 des zweiten Submoduls 21. Der zweite Leistungshalbleiterschalter T3 und seine zugehörige Freilaufdiode D3 sind lediglich Teil des ersten Submoduls 19 und zwischen dem ersten Gleichspannungsknoten 27 und dem Verbindungspunkt 31 des ersten Submoduls 19 geschaltet. Die Diode D4 ist in der Durchflussrichtung von dem zweiten Gleichspannungsknoten 28 des ersten Submoduls 19 zu dem Verbindungspunkt 31 geschaltet, der unmittelbar mit dem ersten Gleichspannungsknoten 37 des zweiten Submoduls 21 verbunden ist. Ferner ist die Anode der gemeinsamen Diode D4 mit dem Kollektor eines Leistungshalbleiterschalters T5 an einem Verbindungspunkt 39' des zweiten Submoduls 21 verbunden, der mit dem zweiten Gleichspannungsknoten 28 des ersten Submoduls 19 unmittelbar verbunden ist. Der Emitter des Leistungshalbleiterschalters T5 ist mit dem zweiten Gleichspannungsknoten 38 des zweiten Submoduls 21 unmittelbar verbunden. Zu dem Leistungshalbleiterschalter T5 ist eine Freilaufdiode D5 antiparallel geschaltet.

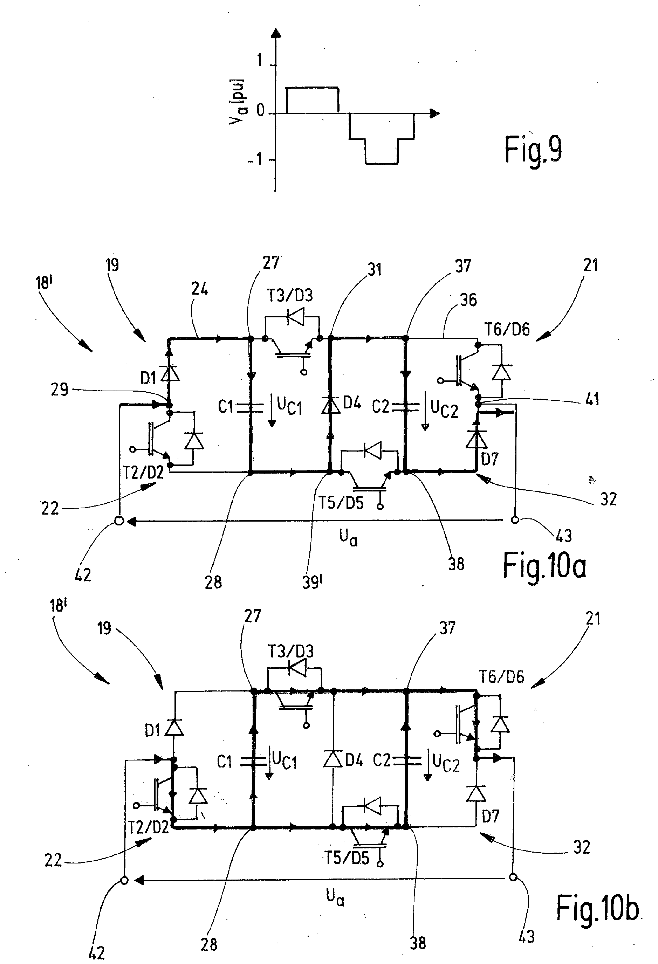

Verschiedene realisierbare Schaltzustände des Doppel-Submoduls 18'der Ausführungsform nach Figur 7 sind in Figur 8 aufgelistet, während die Ausgangsspannungscharakteristik in Figur 9 dargestellt ist. Wiederum ist die Erzeugung einer mindestens vierstufigen Ausgangsspannung möglich, wobei im Vergleich zu der Ausführungsform nach Figur 2 hier die positiven und negativen Spannungsstufen vertauscht sind. Es sind auch viele redundante Schaltzustände möglich, mit denen entweder die Modulanschlussspannung Uₐ = 0 oder eine Spannung U_{c1}, U_{C2}, die der Spannung eines der Kondensatoren C1 bzw. C2 entspricht, eine Spannung U_{C1}+U_{C2}, die der Summenspannung der Kondensatoren entspricht, oder eine Spannung U_{C1} | | U_{C2} erzeugt werden kann, die sich bei Parallelschaltung der Kondensatoren ergibt. Dies ist bspw. in den Schaltzuständen 7 und 16 der Fall. Die Schaltzustände zur Parallelschaltung der Kondensatoren, setzen ebenfalls eine hinreichend gute Symmetrierung der Kondensatorspannung voraus, dass keine hohen Ausgleichsströme zu Beschädigung oder anderen Nachteilen führen. Dementsprechend muss ebenfalls durch geeignete Wahl der Schaltzustände abgesichert werden, dass beide Kondensatorspannungen innerhalb vorgegebener Grenzwerte liegen, bevor sie in einen Schaltzustand für Parallelbetrieb überführt werden. Vorteilhafterweise ist die Spannung des zweiten Kondensators, der über zwei Dioden in Flussrichtung mit den Gleichspannungsknoten des ersten Kondensators verbunden ist, etwas geringer vor einem Schaltzustand im Parallelbetrieb. Damit wird abgesichert, dass beide Dioden sicher sperren und dass das Einschalten der IGBTs zwischen den Gleichspannungsknoten beider Kondensatoren vor dem Parallelbetrieb mit hinreichend geringen Ausgleichsströmen erfolgt.

Nach einer gegebenenfalls erfolgten Pulssperre wird dieser Doppelsubmodultyp in den Schaltzustand 1 überführt, bei dem alle Leistungshalbleiterschalter T2, T3, T5 und T6 ausgeschaltet sind und der Stromfluss durch beide in Reihe geschalteten Kondensatoren erfolgt. Dieser Schaltzustand bewirkt im Fehlerfalle eine Gegenspannung, die dem Kurzschlussstrom entgegenwirkt und diesen abbaut oder zumindest einen weiteren schnellen Anstieg desselben verhindert.

Die Schaltzustände 6 und 8 können bspw. in bestimmten Grenzen zum Balancieren der Energieinhalte, im Nullzustand bzgl. der Ausgangsspannung, der Kondensatoren C1, C2 benutzt werden.

Figuren 10a und 10b zeigen die Schaltungsanordnung des Doppel-Submoduls 18' der Ausführungsform nach Figur 7 unter Veranschaulichung der Stromflüsse durch das Doppel-Submodul 18 in ähnlichen Darstellungen wie in Figuren 5a und 5b für das Doppel-Submodul nach Figur 2. Figur 10a zeigt den Strompfad in dem Fall, in dem alle Leistungshalbleiterschalter T2, T3, T5, T6 des Doppel-Submoduls 18' ausgeschaltet sind (Schaltzustand 1 in Figur 8), wobei der Strom Iₐ der Reihe nach durch beide Kondensatoren C1 und C2 fließt und diese auflädt. Figur 10b zeigt den Fall, in dem alle Leistungshalbleiterschalter T2, T3, T5 und T6 eingeschaltet sind (Schaltzustand 16 in Figur 8), wobei sich der Strom Iₐ auf zwei Strompfade aufteilt, die jeweils durch einen der Kondensatoren C1, C2 führen. In anderen Worten, sind die Kondensatoren C1, C2 in diesem bereits oben erwähnten Fall parallel zueinander geschaltet.

Figur 11 zeigt eine beispielhafte Schaltfolge für das Doppel-Submodul 18' nach Figur 7, ähnlich der Darstellung nach Figur 6 für das Doppel-Submodul 18 nach Figur 2. Wie aus Figur 11 ersichtlich, kann vor einer Parallelschaltung der Kondensatoren C1, C2 der stromabwärtige Kondensator C2 z.B. durch die Schaltfolge 2 oder 3 der Tabelle in Figur 8 geringfügig aufgeladen werden, um die Differenz der Spannungen U_{C2} und U_{C1} der beiden Kondensatoren C1 und C2 vorzugsweise auf einen Wert einzustellen, der kleiner als der erster Schwellenwert Th1 von z.B. 20 Volt und größer als der zweite Schwellenwert Th2 von z.B. 5 Volt ist bzw. im bevorzugten Bereich von 5-10 Volt liegt. Alternativ kann der stromaufwärtige Kondensator C1 z.B. durch die Schaltfolge 4 oder 5 der Tabelle in Figur 8 geringfügig entladen werden. Jedenfalls können beim Übergang in den Schaltzustand 7 mit Parallelschaltung der Kondensatoren C1, C2 unzulässig hohe Ausgleichsströme während der Parallelschaltung vermieden werden.

Bei beiden Doppel-Submodulen 18 und 18' können unterschiedliche Maßnahmen einzeln oder in Kombination miteinander getroffen werden, um sicherzustellen, dass Schaltzustände, in denen die Kondensatoren C1, C2 parallel geschaltet werden, nach Möglichkeit mit einer sehr geringen Differenz der Kondensatorspannungen U_{C1}, U_{C2} erfolgen, um Ausgleichsströme zu Beginn des Schaltzustandes der Parallelschaltung hinreichend gering zu halten. Dies kann, wie vorstehend erläutert, durch eine geeignete Ansteuerung des Doppel-Submoduls 18, 18', insbesondere durch bestimmte Schaltzustände direkt vor den Schaltzuständen der Parallelschaltung erfolgen, wie dies in den Figur 6 und 11 dargestellt ist.

Außerdem begünstigt eine sehr geringe Toleranz der Kondensatorkapazität bzw. begünstigen annähernd identische Kondensatorkapazitäten C1, C2 innerhalb eines Doppel-Submoduls 18, 18', dass die Kondensatorspannungen U_{C1}, U_{C2} in Schaltzuständen einer Reihenschaltung im Betrieb mit fortlaufender Zeit innerhalb des entsprechenden Schaltzustandes (z.B. des Schaltzustandes 8 in Figur 6 oder des Schaltzustandes 1 in Figur 11) nur geringfügig auseinanderlaufen. Vorteilhafterweise liegt die Differenz der Kondensatorspannungen U_{C1}, U_{C2} dann vor einem darauffolgenden Übergang in einen Schaltzustand mit einer Parallelschaltung innerhalb der vorgegebenen Grenzen, so dass Ausgleichsströme hinreichend klein bleiben, ohne dass ein zusätzlicher Schaltzustand zur Symmetrierung erfolgen muss.

Eine andere Möglichkeit bietet eine leicht unterschiedliche Dimensionierung der Kapazitäten C1, C2 der Kondensatoren eines Doppel-Submoduls 18, 18'. Z.B. kann der in Stromflussrichtung erste Kondensator C1 eine geringfügig kleinere Kapazität, verzugsweise um 1% bis 2% kleiner, aufweisen als der nachgeschaltete, zweite Kondensator C2. Damit kann bei Schaltzuständen der Reihenschaltung beider Kondensatoren eines DoppelSubmodules bei vorgegebener Stromflussrichtung sichergestellt werden, dass der Kondensator C1 bzw. C2, dessen Gleichspannungsknoten über Dioden (D4, D5 in Fig. 2 bzw. D3, D5 in Fig. 7) in Flussrichtung mit dem anderen Kondensator C2 bzw. C1 verbunden ist, in höherem Maße an Spannung verliert, damit bei einer darauffolgenden Parallelschaltung Ausgleichsströme über diese Dioden hinreichend gering ausfallen.

Darüber hinaus ist auch der Einsatz eines gestuften Einschaltens der IGBTs T3, T5 in dem Doppel-Submodul 18' nach Figur 7 möglich, um gegebenenfalls den Schaltzustand 7 der Parallelschaltung der Kondensatoren C1, C2 (vgl. Figur 10b) mit erhöhtem Dämpfungswiderstand herbeizuführen. Dabei können die IGBTs T3 und T5 mit einer Gatespannung deutlich unterhalb des üblichen Wertes von etwa +15V, z.B. im Bereich von +3 bis +10V, in einer ersten Stufe eingeschaltet werden, wodurch sie im aktiven Bereich betrieben werden und ein entsättigendes Verhalten im Vergleich zum normalen Betrieb zeigen. In diesem Bereich haben die Bauelemente einen höheren Durchlasswiderstand im Vergleich zum normalen Schaltbetrieb und können in gewissen Grenzen die Ausgleichströme während der Überführung des DoppelSubmodules 18' in Schaltzustände mit einer Parallelschaltung beider Kondensatoren C1, C2 dämpfen und verringern. Nach dem Übergang in den Parallelbetrieb beider Kondensatoren C1, C2 kann die Gatespannung auf den üblichen Wert von typischerweise +15V angehoben werden, um die Halbleiterschalter mit deutlich verminderten Durchlassverlusten weiter zu betreiben. Das Ausschalten der IGBTs kann ohne ein zusätzliches positives, tiefer liegendes Gatespannungsniveau direkt auf die für die Sperrung des Schalters vorgesehene negative Gatespannung erfolgen.

Im Übrigen gelten die Ausführungen hinsichtlich der Funktionsweise und der damit erzielbaren Vorteile, wie sie vorstehend im Zusammenhang mit der Ausführungsform nach Figur 2 dargelegt sind, für das Doppel-Submodul 18' der Ausführungsform nach Figur 7 entsprechend. Insbesondere sind durch die gemeinsame Nutzung der Diode D4 durch beide Submodule 19, 21 die Anzahl der erforderlichen Halbleiterbauelemente und die Kosten für die Realisierung des Doppel-Submoduls 18' im Vergleich zu vergleichbaren Reihen- und/oder Parallelschaltungen von Submodulen reduziert, und auch die Leitungsverluste im Vergleich zu einer Reihenschaltung von Vollbrücken und die damit verbundenen Betriebskosten sind durch eine in den meisten Schaltzuständen reduzierte Anzahl stromführender Leistungshalbleiterschalter verringert.

Es ist ein Doppel-Submodul 18, 18' für einen modularen Mehrpunktstromrichter 8 geschaffen, das ein erstes 19 und ein mit dem ersten gekoppeltes zweites 21 Submodul aufweist. Jedes Submodul 19; 21 weist eine asymmetrische H-Brückenschaltung 22; 32 mit zwei parallelen Brückenzweigen 24, 26; 34, 36 auf, die zwischen einem ersten und einem zweiten Gleichspannungsknoten 27, 28; 37, 38 des Submoduls 19; 21 angeschlossen sind, wobei jeder Brückenzweig 24, 26; 34, 36 durch eine Reihenschaltung aus einem ansteuerbaren Leistungshalbleiterschalter T2, T3, T5, T6 und einer Diode D1, D4, D5, D7 gebildet ist. Ein Speicherkondensator C1, C2 ist parallel zu der asymmetrischen H-Brückenschaltung 22; 32 zwischen dem ersten und dem zweiten Gleichspannungsknoten 27, 28; 37, 38 des Submoduls 19; 21 angeschlossen. Das erste und das zweite Submodul 19; 21 sind derart verschaltet, dass ein Leistungshalbleiterschalter T3 oder eine Diode D4 sowohl Teil eines Brückenzweigs 26 des ersten Submoduls 19 als auch Teil eines Brückenzweigs 34 des zweiten Submoduls 21 ist. Ein modularer Mehrpunktstromrichter 8, der eine Reihenschaltung derartiger Doppel-Submodule 18, 18' in jedem seiner Stromrichterzweige 9a-f aufweist, ist ebenfalls offenbart.

## Patentansprüche

1. Doppel-Submodul für einen modularen Mehrpunktstromrichter, das ein erstes (19) und ein mit dem ersten gekoppeltes zweites (21) Submodul aufweist,
wobei jedes Submodul (19; 21) aufweist:
eine asymmetrische H-Brückenschaltung (22; 32) mit zwei parallelen Brückenzweigen (24, 26; 34, 36), die zwischen einem ersten und einem zweiten Gleichspannungsknoten (27, 28; 37, 38) des Submoduls (19; 21) angeschlossen sind, wobei jeder Brückenzweig (24, 26; 34, 36) durch eine Reihenschaltung aus einem ansteuerbaren Leistungshalbleiterschalter (T2, T3, T5, T6) und einer Diode (D1, D4, D5, D7) gebildet ist; und
einen Kondensator (C1, C2), der parallel zu der asymmetrischen H-Brückenschaltung (22; 32) zwischen dem ersten und dem zweiten Gleichspannungsknoten (27, 28; 37, 38) des Submoduls (19; 21) angeschlossen ist;
wobei das erste Submodul (19) einen ersten Brückenzweig (24) mit einer Reihenschaltung aus einem ersten ansteuerbaren Leistungshalbleiterschalter (T2) und einer ersten Diode (D1), deren Kathode mit dem ersten Gleichspannungskoten (27) des ersten Submoduls (19) verbunden ist, und einen zweiten Brückenzweig (26) mit einer Reihenschaltung aus einem zweiten ansteuerbaren Leistungshalbleiterschalter (T3) und einer zweiten Diode (D4) aufweist, deren Anode mit dem zweiten Gleichspannungsknoten (28) des ersten Submoduls (19) verbunden ist,
wobei das zweite Submodul (21) einen ersten Brückenzweig (34) mit einer Reihenschaltung aus einem ersten ansteuerbaren Leistungshalbleiterschalter (T3; T5) und einer ersten Diode (D4), deren Kathode mit dem ersten Gleichspannungskoten (37) des zweiten Submoduls (21) verbunden ist, und einen zweiten Brückenzweig (36) mit einer Reihenschaltung aus einem zweiten ansteuerbaren Leistungshalbleiterschalter (T6) und einer zweiten Diode (D7) aufweist, deren Anode mit dem zweiten Gleichspannungskoten (38) des zweiten Submoduls (21) verbunden ist, und
wobei das erste und das zweite Submodul (19; 21) derart verschaltet sind, dass ein Leistungshalbleiterschalter (T3) oder eine Diode (D4) sowohl Teil des zweiten Brückenzweigs (26) des ersten Submoduls (19) als auch Teil des ersten Brückenzweigs (34) des zweiten Submoduls (21) ist.

2. Doppel-Submodul nach Anspruch 1, wobei der Verbindungspunkt (29) zwischen dem ersten Leistungshalbleiterschalter (T2) und der ersten Diode (D1) des ersten Brückenzweiges (24) des ersten Submoduls (19) einen ersten Modulanschluss (42) des Doppel-Submoduls (18; 18') bildet und der Verbindungspunkt (41) zwischen dem zweiten Leistungshalbleiterschalter (T6) und der zweiten Diode (D7) des zweiten Brückenzweiges (36) des zweiten Submoduls (21) einen zweiten Modulanschluss (43) des Doppel-Submoduls (18; 18') bildet.

3. Doppel-Submodul nach Anspruch 2, wobei der zweite Leistungshalbleiterschalter (T3) des zweiten Brückenzweiges (26) des ersten Submoduls (19) gleichzeitig den ersten Leistungshalbleiterschalter (T3) des ersten Brückenzweiges (34) des zweiten Submoduls (21) bildet.

4. Doppel-Submodul nach Anspruch 2, wobei die zweite Diode (D4) des zweiten Brückenzweiges (26) des ersten Submoduls (19) gleichzeitig die erste Diode (D4) des ersten Brückenzweiges (34) des zweiten Submoduls (21) bildet.

5. Doppel-Submodul nach Anspruch 3 oder 4, wobei den Leistungshalbleiterschaltern (T2, T3, T5, T6) eine antiparallel geschaltete Freilaufdiode (D2, D3, D5, D6) zugeordnet ist; und/oder
wobei das Doppel-Submodul (18, 18') außer den genannten Leistungshalbleiterschaltern (T2, T3, T5, T6), Dioden (D1, D4, D5, D7) und Kondensatoren (C1, C2) sowie gegebenenfalls vorhandenen antiparallelen Freilaufdioden (D2, D3, D5, D6) vorzugsweise keine weiteren aktiven oder passiven elektrischen oder elektronischen Bauelemente aufweist, insbesondere frei von Dämpfungswiderständen zur Dämpfung von Ausgleichsströmen ist.

6. Doppel-Submodul nach einem beliebigen der vorhergehenden Ansprüche, wobei das Doppel-Submodul (18; 18') dazu eingerichtet ist, bei Ansteuerung der Leistungshalbleiterschalter (T2, T3, T5, T6) einen unipolaren Strom (Iₐ) zwischen dem ersten und dem zweiten Modulanschluss (42, 43) zu führen und eine bipolare Anschlussspannung (Uₐ) zwischen den Modulanschlüssen (43, 42) zu erzeugen.

7. Doppel-Submodul nach einem beliebigen der vorhergehenden Ansprüche, wobei das Doppel-Submodul (18; 18') dazu eingerichtet ist, bei Ansteuerung der Leistungshalbleiterschalter (T2, T3, T5, T6) zwischen Modulanschlüssen (42, 43) eine Null-Ausgangsspannung, eine Ausgangsspannung (Uₐ), die der Spannung (U_{C1}, U_{C2}) eines der Kondensatoren (C1; C2) entspricht, eine Spannung, die der Summe (U_{C1}+U_{C2}) der Spannungen der Kondensatoren (C1; C2) entspricht, oder eine positive bzw. negative Ausgangsspannung (U_{C1} | | UC2) zu erzeugen, die sich bei einer Parallelschaltung der Kondensatoren (C1; C2) einstellt.

8. Doppel-Submodul nach einem beliebigen der vorhergehenden Ansprüche, wobei das Doppel-Submodul (18; 18') in bestimmten Schaltzuständen dazu eingerichtet ist, einen Strom (Iₐ) zwischen dem ersten und dem zweiten Modulanschluss (42, 43) des Doppel-Submoduls (18; 18') durch zwei parallele Strompfade innerhalb des Doppel-Submoduls (18; 18') zu führen, die jeweils einen der Kondensatoren (C1, C2) der Submodule (19; 21) enthalten.

9. Doppel-Submodul nach einem beliebigen der vorhergehenden Ansprüche, wobei die Kondensatoren (C1, C2) des ersten und des zweiten Submoduls (19; 21) mit einer sehr geringen Toleranz (k) bezüglich ihrer Kapazität gefertigt sind, wobei die Toleranz (k) vorzugsweise kleiner als 3 %, mehr bevorzugt kleiner als 1 % ist.

10. Modularer Mehrpunktstromrichter zur Umwandlung einer Wechselspannung in eine Gleichspannung oder umgekehrt
mit wenigstens einem Phasenzweig (11a-c), der einen Wechselspannungsanschluss (17a-c) und wenigstens einen mit einem Gleichspannungszwischenkreis verbundenen Gleichspannungsanschluss (12, 13) aufweist, wobei zwischen jedem Gleichspannungsanschluss (12, 13) und jedem Wechselspannungsanschluss (17a-c) ein Stromrichterzweig (9a-f) ausgebildet ist,
wobei in jedem der Stromrichterzweige (9a-f) wenigstens ein Doppel-Submodul (18; 18') nach einem beliebigen der vorhergehenden Ansprüche angeordnet ist.

11. Modularer Mehrpunktstromrichter nach Anspruch 10, der eine der Anzahl von Phasen entsprechende Anzahl von Phasenzweigen (11a-c), vorzugsweise zwei oder drei Phasenzweige, einen mit einem ersten Pol des Gleichspannungszwischenkreises verbundenen ersten Gleichspannungsanschluss (12), einen mit einem zweiten Pol des Gleichspannungszwischenkreises () verbundenen zweiten Gleichspannungsanschluss (13) und in allen Stromrichterzweigen (9a-f) vorzugsweise die gleiche Anzahl von Doppel-Submodulen (18; 18'), vorzugsweise jeweils zwei oder mehrere in Reihe verbundene Doppel-Submodule (18; 18'), aufweist.

12. Modularer Mehrpunktstromrichter nach Anspruch 10 oder 11, der ferner eine Steuereinrichtung (44) zur Steuerung des Betriebs des modularen Mehrpunktstromrichters (8) aufweist, wobei die Steuereinrichtung (44) dazu eingerichtet ist, die Leistungshalbleiterschalter (T2, T3, T5, T6) derart anzusteuern, dass eine bipolare Ausgangsspannung (Uₐ) erzeugt wird und stets ein unipolarer Strom zwischen den Modulanschlüssen (42, 32) eines jeden Doppel-Submoduls (18; 18') übertragen wird.

13. Modularer Mehrpunktstromrichter nach einem beliebigen der Ansprüche 10-12, wobei die Steuereinrichtung (44) dazu eingerichtet ist, einen Kurzschluss in dem Gleichspannungszwischenkreis zu erkennen und daraufhin alle Leistungshalbleiterschalter (T2, T3, T5, T6) eines Doppel-Submoduls (18; 18') ein- bzw. auszuschalten, um einen Kurzschlussstrom innerhalb des modularen Mehrpunktstromrichters (8) über parallele Strompfade in dem Doppel-Submodul (18; 18') zu führen, wobei jeder Strompfad einen der Kondensatoren (C1, C2) der Submodule (19; 21) aufweist, wobei eine dem Kurzschlussstrom entgegenwirkende Gegenspannung aufgebaut wird.

14. Modularer Mehrpunktstromrichter nach einem der Ansprüche 10-13, wobei die Steuereinrichtung (44) dazu eingerichtet ist, die Spannung (U_{C1}, U_{C2}) über den Kondensatoren (C1; C2) der Submodule (19; 21) derart zu steuern bzw. zu regeln, dass beim Umschalten in einen Schaltzustand mit parallelen Kondensatoren (C1; C2) eine Differenz der Spannungen (U_{C1}, U_{C2}) der Kondensatoren (C1; C2) einen vorgegebenen ersten Schwellenwert (Th1) nicht überschreitet, wobei der erste Schwellenwert (Th1) mit der maximalen Toleranz für die Kapazität der Kondensatoren (C1; C2) in Beziehung steht.

15. Modularer Mehrpunktstromrichter nach einem der Ansprüche 10-14, wobei die Steuereinrichtung (44) dazu eingerichtet ist, die Spannung (U_{C1}, U_{C2}) über den Kondensatoren (C1; C2) der Submodule (19; 21) derart zu steuern bzw. zu regeln, dass vor dem Umschalten in einen Schaltzustand mit parallelen Kondensatoren (C1; C2) eine Differenz der Spannungen (U_{C1}, U_{C2}) der Kondensatoren (C1; C2) einen vorgegebenen zweiten Schwellenwert (Th2) nicht unterschreitet, wobei der zweite Schwellenwert (Th2) mit der maximalen Toleranz für die Kapazität der Kondensatoren (C1; C2) in Beziehung steht.

16. Modularer Mehrpunktstromrichter nach einem der Ansprüche 10-15, wobei die Steuereinrichtung (44) dazu eingerichtet ist, die Spannung (U_{C1}, U_{C2}) über den Kondensatoren (C1, C2) der Submodule (19; 21) derart zu steuern bzw. zu regeln, dass beim Umschalten in einen Schaltzustand mit einer Parallelschaltung der Kondensatoren (C1, C2) die Spannung (U_{C1}, U_{C2}) über dem Kondensator (C1, C2), dessen Gleichspannungsknoten über Dioden (D4, D5; D3, D5) in Durchflussrichtung mit dem anderen Kondensator (C2, C1) verbunden ist, annähernd gleich der oder kleiner als die Spannung (U_{C2}, U_{C1}) des anderen Kondensators (C1, C2) ist.

17. Modularer Mehrpunktstromrichter nach einem der Ansprüche 10-15, wobei die Kondensatoren (C1; C2) der Submodule (19; 21) mit geringfügig unterschiedlichen Kapazitätswerten ausgelegt sind, die vorzugsweise um 1% bis 2% differieren, wobei der in Stromflussrichtung erste Kondensator (C1) vorzugsweise eine geringfügig kleinere Kapazität aufweist als der in Stromflussrichtung nachgeschaltete, zweite Kondensator.

18. Modularer Mehrpunktstromrichter nach einem der Ansprüche 10-17, wobei die Steuereinrichtung (44) dazu eingerichtet ist, einzelne oder mehrere Leistungshalbleiterschalter (T1-T6), insbesondere diejenigen, die bei der Parallelschaltung der Kondensatoren (C1, C2) beteiligt sind, mit einer ersten Ansteuerspannung anzusteuern, um sie für einen Übergang in einen Schaltzustand mit einer Parallelschaltung der Kondensatoren (C1, C2) derart einzuschalten, dass sie im aktiven Bereich betrieben werden und ein entsättigendes Verhalten im Vergleich zum normalen Betrieb zeigen, und die Leistungshalbleiterschalter (T1-T6) anschließend mit einer höheren zweiten Ansteuerspannung anzusteuern, um sie in dem Schaltzustand mit der Parallelschaltung der Kondensatoren (C1, C2) zu betreiben.

## Claims

1. A double submodule for a modular multilevel power converter comprising a first (19) and a second (21) submodule coupled to the first one,
wherein each submodule (19; 21) comprises:
an asymmetric H bridge circuit (22; 32) with two parallel bridge branches which are connected between a first and a second direct voltage node (27, 28; 37, 38) of the submodule (19; 21), wherein each bridge branch (24, 26; 34, 36) is formed by a series connection of a controllable power semiconductor switch (T2, T3, T5, T6) and a diode (D1, D4, D5, D7); and
a capacitor (C1, C2) which is connected in parallel to the asymmetric H bridge circuit (22; 32) between the first and the second direct voltage node (27, 28; 37, 38) of the submodule (19; 21);
wherein the first submodule (19) comprises a first bridge branch (24) with a series connection of a first controllable power semiconductor switch (T2) and a first diode (D1), the cathode of which is connected to the first direct voltage node (37) of the first submodule (19), and a second bridge branch with a series connection of a second controllable power semiconductor switch (T3) and a second diode (D4), the anode of which is connected to the second direct voltage node (28) of the first submodule (19),
wherein the second submodule (21) comprises a first bridge branch (34) with a series connection of a first controllable power semiconductor switch (T3; T5) and a first diode (D4), the cathode of which is connected to the first direct voltage node (37) of the second submodule (21), and a second bridge branch (36) with a series connection of a second controllable power semiconductor switch (T6) and a second diode (D7), the anode of which is connected to the second direct voltage node (38) of the second submodule (21), and
wherein the first and the second submodule (19; 21) are connected in such a way that a power semiconductor switch (T3) or a diode (D4) is both part of the second bridge branch (26) of the first submodule (19) and part of the first bridge branch (34) of the second submodule (21).

2. The double submodule according to claim 1, wherein the connection point (29) between the first power semiconductor switch (T2) and the first diode (D1) of the first bridge branch (24) of the first submodule (19) forms a first module terminal (42) of the double submodule (18; 18') and the connection point (41) between the second power semiconductor switch (T6) and the second diode (D7) of the second bridge branch (36) of the second submodule (21) forms a second module terminal (43) of the double submodule (18; 18').

3. The double submodule according to claim 2, wherein the second power semiconductor switch (T3) of the second bridge branch (26) of the first submodule (19) forms at the same time the first power semiconductor switch (T3) of the first bridge branch (34) of the second submodule (21).

4. The double submodule according to claim 2, wherein the second diode (D4) of the second bridge branch (26) of the first submodule (19) forms at the same time the first diode (D4) of the first bridge branch (34) of the second submodule (21) .

5. The double submodule according to claim 3 or 4, wherein an antiparallel connected freewheeling diode (D2, D3, D5, D6) is associated with the power semiconductor switches (T2, T3, T5, T6); and/or
wherein the double submodule (18, 18'), except for said power semiconductor switches (T2, T3, T5, T6), diodes (D1, D4, D5, D7) and capacitors (C1, C2) and any optionally present antiparallel freewheeling diodes (D2, D3, D5, D6), preferably comprises no other active or passive electrical or electronic components, in particular is free of damping resistors for damping of compensating currents.

6. The double submodule according to anyone of the preceding claims, wherein the double submodule (18, 18') is configured to conduct a unipolar current (Iₐ) between the first and the second module terminals (42, 43) and to generate a bipolar terminal voltage (Uₐ) between the module terminals (43, 42) when the power semiconductor switches (T2, T3, T5, T6) are controlled.

7. The double submodule according to anyone of the preceding claims, wherein the double submodule (18; 18') is configured to generate between module terminals (42, 43) a zero output voltage, an output voltage (Uₐ) that corresponds to the voltage (U_{C1}, U_{C2}) of one of the capacitors (C1; C2), a voltage that corresponds to the sum (U_{C1}+U_{C2}) of the voltages of the capacitors (C1; C2), or a positive or negative output voltage (U_{C1}||UC2), which is established at a parallel connection of the capacitors (C1; C2), when the power semiconductor switches (T2, T3, T5, T6) are controlled.

8. The double submodule according to anyone of the preceding claims, wherein the double submodule (18; 18') is configured in certain switching states to conduct a current (Iₐ) between the first and the second module terminals (42, 43) of the double submodule (18; 18') through two parallel current paths within the double submodule (18; 18'), which each include one of the capacitors (C1, C2) of the submodules (19; 21).

9. The double submodule according to anyone of the preceding claims, wherein the capacitors (C1, C2) of the first and the second submodule (19; 21) are manufactured with a very low tolerance (k) in their capacitance, wherein the tolerance (k) is preferably less than 3 %, more preferably less than 1 %.

10. A modular multilevel power converter for converting an alternating voltage into a direct voltage or vice versa, comprising:
at least one phase branch (11a-c) comprising an alternating voltage connection (17a-c) and at least one direct voltage connection (12, 13) connected to a direct voltage intermediate circuit, wherein a power converter branch (9a-f) is formed between each direct voltage connection (12, 13) and each alternating voltage connection (17a-c),
wherein at least one double submodule (18; 18') according to anyone of the preceding claims is arranged in each of the power converter branches (9a-f).

11. The modular multilevel power converter according to claim 10, comprising a number of branches (11a-c) corresponding to the number of phases, preferably two or three phase branches, a first direct voltage connection (12) connected to a first pole of the direct voltage intermediate circuit, a second direct voltage connection (13) connected to a second pole of the direct voltage intermediate circuit ( ), and preferably the same number of double submodules (18, 18') in all power converter branches (9a-f), preferably two or more double submodules (18; 18') connected in series in each power converter branch.

12. The modular multilevel power converter according to claim 10 or 11, further comprising a control device (44) for controlling the operation of the modular multilevel power converter (8), wherein the control device (44) is configured to control the power semiconductor switches (T2, T3, T5, T6) such that a bipolar output voltage (Uₐ) is generated and a unipolar current is always transferred between the module terminals (42, 32) of each double submodule (18; 18').

13. The modular multilevel power converter according to anyone of the claims 10-12, wherein the control device (44) is configured to detect a short circuit in the direct voltage intermediate circuit and to subsequently switch on or off all power semiconductor switches (T2, T3, T5, T6) of a double submodule (18; 18') in order to conduct a short circuit current within the modular multilevel power converter (8) through parallel current paths in the double submodule (18; 18'), wherein each current path comprises one of the capacitors (C1, C2) of the submodules (19; 21), wherein a counter voltage is built up that counteracts the short circuit current.

14. The modular multilevel power converter according to anyone of the claims 10-13, wherein the control device (44) is configured to control or regulate the voltage (U_{C1}, U_{C2}) over the capacitors (C1; C2) of the submodules (19; 21) such that, when switching into a switching state with parallel capacitors (C1; C2), a difference of the voltages (U_{C1}, U_{C2}) of the capacitors (C1; C2) does not exceed a predetermined first threshold value (Th1), wherein the first threshold value (Th1) is related to the maximum tolerance for the capacitance of the capacitors (C1; C2).

15. The modular multilevel power converter according to anyone of the claims 10-14, wherein the control device (44) is configured to control or regulate the voltage (U_{C1}, U_{C2}) over the capacitors (C1; C2) of the submodules (19; 21) such that, before switching into a switching state with parallel capacitors (C1; C2), a difference of the voltages (U_{C1}, U_{C2}) of the capacitors (C1; C2) does not drop below a predetermined second threshold value (Th2), wherein the second threshold value (Th2) is related to the maximum tolerance for the capacitance of the capacitors (C1; C2).

16. The modular multilevel power converter according to anyone of the claims 10-15, wherein the control device (44) is configured to control or regulate the voltage (U_{C1}, U_{C2}) over the capacitors (C1, C2) of the submodules (19; 21) such that, when switching into a switching state with a parallel connection of the capacitors (C1, C2), the voltage (U_{C1}, U_{C2}) over the capacitor (C1, C2), the direct voltage node of which is connected in the flow direction to the other capacitor (C2, C1), is nearly the same or less than the voltage (U_{C2}, U_{C1}) of the other capacitor (C1, C2).

17. The modular multilevel power converter according to anyone of the claims 10-15, wherein the capacitors (C1; C2) of the submodules (19; 21) are designed with slightly different capacitance values which preferably differ by 1 % to 2 %, wherein the first capacitor (C1) in the current flow direction preferably has a slightly smaller capacitance than the second capacitor connected downstream in the current flow direction.

18. The modular multilevel power converter according to anyone of the claims 10-17, wherein the control device (44) is configured to control individual or multiple power semiconductor switches (T1-T6), in particular those involved in the parallel connection of the capacitors (C1, C2), using a first control voltage in order to switch them on for a transition into a switching state with a parallel connection of the capacitors such that they can be operated in the active range and show a desaturating behavior compared to normal operation, and to subsequently control the power semiconductor switches (T1-T6) using a higher second control voltage in order to operate them in the switching state with the parallel connection of the capacitors (C1, C2).

## Revendications

1. Sous-module double pour un convertisseur multipoints modulaire qui présente un premier (19) et un second (21) sous-module couplé au premier
selon lequel chaque sous-module (19; 21) présente :
un circuit en pont en H asymétrique (22; 32) avec deux branches de pont parallèles (24, 26; 34, 36), qui sont raccordées entre un premier et un second nœud de tension continue (27, 28; 37, 38) du sous-module (19; 21), selon lequel chaque branche de pont (24, 26; 34, 36) est formée, au travers d'un circuit en série, d'un interrupteur à semi-conducteurs de puissance commandable (T2, T3, T5, T6) et d'une diode (D1, D4, D5, D7); et
un condensateur (C1, C2) qui est raccordé en parallèle avec le circuit en pont en H asymétrique (22; 32), entre en premier et un second nœud de tension continue (27, 28; 37, 38) du sous-module (19; 21);
selon lequel le premier sous-module (19) présente une première branche de pont (24) avec un circuit en série constitué d'un premier interrupteur à semi-conducteurs de puissance commandable (T2) et d'une première diode (D1), dont la cathode est connectée au premier nœud de tension continue (27) du premier sous-module (19), et une seconde branche de pont (26) avec un circuit en série constitué d'un second interrupteur à semi-conducteurs de puissance commandable (T3) et d'une seconde diode (D4), dont l'anode est connectée au second nœud de tension continue (28) du premier sous-module (19),
selon lequel le second sous-module (21) présente une première branche de pont (34) avec un circuit en série constitué d'un premier interrupteur à semi-conducteurs de puissance commandable (T3; T5) et d'une première diode (D4), dont la cathode est connectée au premier nœud de tension continue (37) du second sous-module (21), et une seconde branche de pont (36) avec un circuit en série constitué d'un second interrupteur à semi-conducteurs de puissance commandable (T6) et d'une seconde diode (D7), dont l'anode est connectée au second nœud de tension continue (38) du second sous-module (21), et
selon lequel le premier et le second sous-module (19; 21) sont interconnectés de telle façon qu'un interrupteur à semi-conducteurs de puissance (T3) ou une diode (D4) soit non seulement une partie de la seconde branche de pont (26) du premier sous-module (19), mais aussi une partie de la première branche de pont (34) du second sous-module (21).

2. Sous-module double selon la revendication 1, selon lequel le point de connexion (29) entre le premier interrupteur à semi-conducteurs de puissance (T2) et la première diode (D1) de la première branche de pont (24) du premier sous-module (19) forme un premier raccord de module (42) du sous-module double (18; 18') et le point de connexion (41) entre le second interrupteur à semi-conducteurs de puissance (T6) et la seconde diode (D7) de la seconde branche de pont (36) du second sous-module (21) forme un second raccord de module (43) du sous-module double (18; 18').

3. Sous-module double selon la revendication 2, selon lequel le second interrupteur à semi-conducteurs de puissance (T3) de la seconde branche de pont (26) du premier sous-module (19) forme en même temps le premier interrupteur à semi-conducteurs de puissance (T3) de la première branche de pont (34) du second sous-module (21).

4. Sous-module double selon la revendication 2, selon lequel la seconde diode (D4) de la seconde branche de pont (26) du premier sous-module (19) forme en même temps la première diode (D4) de la première branche de pont (34) du second sous-module (21).

5. Sous-module double selon la revendication 3 ou 4, selon lequel une diode de roue libre (D2, D3, D5, D6) connectée de manière antiparallèle est associée aux interrupteurs à semi-conducteurs de puissance (T2, T3, T5, T6); et/ou
selon lequel le sous-module double (18, 18') ne présente de préférence, hormis les interrupteurs à semi-conducteurs de puissance (T2, T3, T5, T6), les diodes (D1, D4, D5, D7) et les condensateurs (C1, C2) cités, ainsi que, le cas échéant, des diodes de roule libre antiparallèles existantes (D2, D3, D5, D6), pas d'autres composants électriques ou électroniques actifs ou passifs, en particulier est exempt de résistances d'amortissement pour amortir des courants de compensation.

6. Sous-module double selon l'une quelconque des revendications précédentes, selon lequel le sous-module double (18; 18') est agencé, lors d'une commande des interrupteurs à semi-conducteurs de puissance (T2, T3, T5, T6), pour conduire un courant unipolaire (Iₐ) entre le premier et le second raccord de module (42, 43) et produire une tension de raccords bipolaire (Uₐ) entre les raccords de module (43, 42).

7. Sous-module double selon l'une quelconque des revendications précédentes, selon lequel le sous-module double (18; 18') est agencé, lors d'une commande des interrupteurs à semi-conducteurs de puissance (T2, T3, T5, T6), pour produire entre des raccords de module (42, 43) une tension de sortie nulle, une tension de sortie (Uₐ) qui correspond à la tension (U_{C1}, U_{C2}) d'un des condensateurs (C1; C2), une tension qui correspond à la somme (U_{C1}+U_{C2}) des tensions des condensateurs (C1; C2), ou une tension de sortie positive ou négative (U_{C1} || UC2), qui apparaît dans un montage en parallèle des condensateurs (C1; C2).

8. Sous-module double selon l'une quelconque des revendications précédentes, selon lequel le sous-module double (18; 18') est agencé, dans des états de commutation déterminés, pour conduire un courant (Iₐ) entre le premier et le second raccord de module (42, 43) du sous-module double (18; 18') à travers deux trajets de courant parallèles à l'intérieur du sous-module double (18; 18') qui contiennent respectivement un des condensateurs (C1, C2) des sous-modules (19; 21).

9. Sous-module double selon l'une quelconque des revendications précédentes, selon lequel les condensateurs (C1, C2) du premier et du second sous-module (19; 21) sont fabriqués avec une tolérance (k) très faible en ce qui concerne leur capacité, selon lequel la tolérance (k) est de préférence inférieure à 3 %, de manière plus préférée inférieure à 1 %.

10. Convertisseur multipoints modulaire pour la conversion d'une tension alternative en une tension continue ou inversement
avec au moins une branche de phase (11a-c) qui présente un raccord de tension alternative (17a-c) et au moins un raccord de tension continue (12, 13) connecté à un circuit intermédiaire à tension continue, selon lequel une branche de convertisseur (9a-f) est agencée entre chaque raccord de tension continue (12, 13) et chaque raccord de tension alternative (17a-c),
selon lequel dans chacune des branches de convertisseur (9a-f), au moins un sous-module double (18 ; 18') est configuré selon l'une quelconque des revendications précédentes.

11. Convertisseur multipoints modulaire selon la revendication 10, qui présente un nombre de branches de phase (11a-c) correspondant au nombre de phases, de préférence deux ou trois branches de phase, un premier raccord de tension continue (12) connecté à un premier pôle du circuit intermédiaire à tension continue, un second raccord de tension continue (13) connecté à un second pôle du circuit intermédiaire à tension continue () et, dans toutes les branches de convertisseur (9a-f), de préférence le même nombre de sous-modules doubles (18; 18'), de préférence respectivement deux ou plusieurs sous-modules doubles (18; 18') connectés en série.

12. Convertisseur multipoints modulaire selon la revendication 10 ou 11, qui présente en outre un dispositif de commande (44) pour commander le fonctionnement du convertisseur multipoints modulaire (8), selon lequel le dispositif de commande (44) est agencé pour commander les interrupteurs à semi-conducteurs de puissance (T2, T3, T5, T6) de telle façon qu'une tension de sortie bipolaire (Uₐ) soit produite et qu'un courant unipolaire soit constamment transféré entre les raccords de module (42, 32) de chaque sous-module double (18; 18').

13. Convertisseur multipoints modulaire selon l'une quelconque des revendications 10-12, selon lequel le dispositif de commande (44) est agencé pour reconnaître un court-circuit dans le circuit intermédiaire à tension continue et après cela, pour enclencher ou couper tous les interrupteurs à semi-conducteurs de puissance (T2, T3, T5, T6) d'un sous-module double (18; 18'), afin de conduire un courant de court-circuit à l'intérieur du convertisseur multipoints modulaire (8) à travers des trajets de courant parallèles dans le sous-module double (18; 18'), selon lequel chaque trajet de courant présente un des condensateurs (C1, C2) des sous-modules (19; 21), selon lequel une contre-tension opposée au courant de court-circuit est créée.

14. Convertisseur multipoints modulaire selon l'une des revendications 10-13, selon lequel le dispositif de commande (44) est agencé pour commander ou régler la tension (U_{C1}, U_{C2}) à travers les condensateurs (C1; C2) du sous-module (19; 21) de telle façon que, lors d'une commutation dans un état de commutation avec des condensateurs (C1; C2) en parallèle, une différence entre les tensions (U_{C1}, U_{C2}) des condensateurs (C1; C2) ne dépasse pas une première valeur de seuil (Th1) prédéfinie, selon lequel la première valeur de seuil (Th1) est en rapport avec la tolérance maximale pour la capacité des condensateurs (C1; C2).

15. Convertisseur multipoints modulaire selon l'une des revendications 10-14, selon lequel le dispositif de commande (44) est agencé pour commander ou régler la tension (U_{C1}, U_{C2}) à travers les condensateurs (C1; C2) du sous-module (19; 21) de telle façon que, avant la commutation dans un état de commutation avec des condensateurs (C1; C2) en parallèle, une différence entre les tensions (U_{C1}, U_{C2}) des condensateurs (C1; C2) ne dépasse pas une seconde valeur de seuil (Th2) prédéfinie, selon lequel la seconde valeur de seuil (Th2) est en rapport avec la tolérance maximale pour la capacité des condensateurs (C1; C2).

16. Convertisseur multipoints modulaire selon l'une des revendications 10-15, selon lequel le dispositif de commande (44) est agencé pour commander ou régler la tension (U_{C1}, U_{C2}) à travers les condensateurs (C1, C2) du sous-module (19; 21) de telle façon que, lors d'une commutation dans un état de commutation avec une montage en parallèle des condensateurs (C1, C2), la tension (U_{C1}, U_{C2}) à travers le condensateur (C1, C2), dont le nœud de tension continue est connecté à l'autre condensateur (C2, C1) dans la direction du débit par l'intermédiaire de diodes (D4, D5 ; D3, D5), soit à peu près la même ou inférieure à la tension (U_{C2}, U_{C1}) de l'autre condensateur (C1, C2).

17. Convertisseur multipoints modulaire selon l'une des revendications 10-15, selon lequel les condensateurs (C1; C2) du sous-module (19; 21) sont conçus avec des valeurs de capacité légèrement différentes, qui diffèrent de préférence de 1% à 2%, selon lequel le premier condensateur (C1) dans la direction du flux de courant présente de préférence une capacité légèrement inférieure à celle du second condensateur monté en aval dans la direction du flux de courant.

18. Convertisseur multipoints modulaire selon l'une des revendications 10-17, selon lequel le dispositif de commande (44) est agencé pour commander un ou plusieurs interrupteurs à semi-conducteurs de puissance (T1-T6), en particulier ceux qui sont associés au montage en parallèle des condensateurs (C1, C2), avec une première tension de commande, afin de les enclencher en vue d'un passage dans un état de commutation avec un montage en parallèle des condensateurs (C1, C2) de telle façon qu'ils fonctionnent dans la zone active et qu'ils montrent un comportement désaturant par comparaison avec le fonctionnement normal, et pour ensuite commander les interrupteurs à semi-conducteurs de puissance (T1-T6) avec une seconde tension de commande plus élevée afin de les faire fonctionner dans l'état de commutation avec le montage en parallèle des condensateurs (C1, C2).
